# EUROPEAN PATENT APPLICATION

(11) **EP 4 549 164 A1**
(43) Date of publication of application: **07.05.2025**
(21) Application number: 23831409.0
(22) Date of filing: 27.06.2023
(51) Int. Cl.: B41M 5/44, B32B 27/36, B41M 5/337, B41M 5/40, B41M 5/42, B41M 5/46

(54) **RECORDING MEDIUM AND LAMINATE**

(30) Priority: 29.06.2022 JP 2022105005
(71) Applicant: Sony Group Corporation, Tokyo 108-0075 (JP)
(72) Inventor: YAMANO, Ryota, Tokyo 108-0075 (JP); TAKAGI, Kenji, Tokyo 108-0075 (JP); KAINO, Yuriko, Tokyo 108-0075 (JP); MIZUNO, Hiroshi, Tokyo 108-0075 (JP)
(74) Representative: D Young & Co LLP
(86) International application number: PCT/JP2023/023689
(87) International publication number: WO 2024/004969

(57) **Abstract**

Provided is a recording medium capable of increasing a peel strength between a recording layer and a resin layer.

The recording medium includes two or more recording layers and one or more resin layers. The recording layer contains a first polycarbonate resin. The resin layer is provided between two of the recording layers. The resin layer contains an ultraviolet curable resin and a second polycarbonate resin.

## Description

### TECHNICAL FIELD

The present disclosure relates to a recording medium and a laminate including the recording medium.

### BACKGROUND ART

In recent years, a recording medium including a plurality of recording layers has been developed as a recording medium substituted for printed matter. Patent Document 1 discloses a recording medium including a plurality of recording layers and a plurality of heat insulating layers (resin layers), in which each resin layer is provided between the plurality of recording layers.

### CITATION LIST

### PATENT DOCUMENT

Patent Document 1: Pamphlet of International Publication No. 2018/092488

### SUMMARY OF THE INVENTION

### PROBLEMS TO BE SOLVED BY THE INVENTION

However, in the conventional recording medium, a peel strength between the recording layer and the resin layer may decrease depending on a material constituting the resin layer.

An object of the present disclosure is to provide a recording medium capable of increasing a peel strength between a recording layer and a resin layer, and a laminate including the recording medium.

### SOLUTIONS TO PROBLEMS

In order to solve the above problem, a first recording medium according to the present disclosure includes:
two or more recording layers; and
one or more resin layers, in which
each of the recording layers contains a first polycarbonate resin,
each of the resin layers is provided between two of the recording layers, and
each of the resin layers contains an ultraviolet curable resin and a second polycarbonate resin.

A second recording medium according to the present disclosure includes:
two or more recording layers; and
one or more resin layers, in which
each of the recording layers contains a first thermoplastic resin,
each of the resin layers is provided between two of the recording layers, and
each of the resin layers contains an ultraviolet curable resin and a second thermoplastic resin of the same type as the first thermoplastic resin.

A first laminate according to the present disclosure includes:
a base material;
an intermediate layer provided on the base material and having an accommodation part;
a recording medium provided in the accommodation part; and
an overlay layer provided on the intermediate layer, in which
the accommodation part is provided in a part of a plane of the intermediate layer,
the accommodation part is a through hole penetrating in a thickness direction of the intermediate layer, or a recess recessed in a thickness direction of the intermediate layer,
the base material, the intermediate layer, and the overlay layer contain the same kind of resin material,
the base material and the intermediate layer are bonded to each other by fusion, and the intermediate layer and the overlay layer are bonded to each other by fusion, and
the recording medium is the first recording medium or the second recording medium described above.

A second laminate according to the present disclosure includes:
a base material;
an overlay layer;
an intermediate layer provided between the base material and the overlay layer and having an accommodation part; and
a recording medium provided in the accommodation part, in which
the accommodation part is provided in a part of a plane of the intermediate layer,
the accommodation part is a through hole penetrating in a thickness direction of the intermediate layer, or a recess recessed in a thickness direction of the intermediate layer,
the base material, the intermediate layer, and the overlay layer contain the same kind of resin material,
the base material and the intermediate layer are bonded to each other by a thermal adhesive, and the intermediate layer and the overlay layer are bonded to each other by a thermal adhesive, and
the recording medium is the first recording medium or the second recording medium described above.

### BRIEF DESCRIPTION OF DRAWINGS

Fig. 1 is a cross-sectional view illustrating an example of a configuration of a recording medium according to a first embodiment.
Fig. 2 is a diagram of a testing apparatus for a 90 degree peel test.
Fig. 3A is a view for explaining a preparation step for the 90 degree peel test. Fig. 3B is a diagram of the testing apparatus for the 90 degree peel test.
Fig. 4 is a cross-sectional view illustrating an example of a configuration of a recording medium according to a second embodiment.
Fig. 5A is a plan view illustrating an example of an appearance of a card according to Application example 1. Fig. 5B is a cross-sectional view taken along a line VB-VB in Fig. 5A.
Fig. 6 is a cross-sectional view illustrating an example of a configuration of a card according to Modification 1 of Application example 1.
Fig. 7 is a cross-sectional view illustrating an example of a configuration of a card according to Modification 2 of Application example 1.
Fig. 8A is a perspective view illustrating an example of an appearance of a card according to Modification 3 of Application example 1. Fig. 8B is a cross-sectional view taken along a line VIIIB-VIIIB in Fig. 8A.
Fig. 9 is a cross-sectional view illustrating an example of a configuration of a card according to Application example 2.
Fig. 10 is a cross-sectional view illustrating an example of a configuration of a card according to Modification 1 of Application example 2.
Fig. 11 is a cross-sectional view illustrating an example of a configuration of a card according to Modification 2 of Application example 2.
Fig. 12 is a cross-sectional view illustrating an example of a configuration of a card according to Modification 3 of Application example 2.
Fig. 13 is a perspective view illustrating an example of an appearance of a booklet according to Application example 3.
Fig. 14A is a plan view illustrating an example of an appearance on a front side of a smartphone according to Application example 4. Fig. 14B is a plan view illustrating an example of an appearance on a back side of the smartphone according to Application example 4.
Fig. 15 is a perspective view illustrating an example of an appearance of a notebook personal computer according to Application example 5.
Fig. 16 is a perspective view illustrating an example of an appearance of a cosmetic container according to Application example 6.
Fig. 17 is a graph showing a relationship between a content of a polycarbonate resin and an average peel strength.

### MODE FOR CARRYING OUT THE INVENTION

Embodiments of the present disclosure will be described in the following order with reference to the drawings. Note that the same or corresponding portions will be denoted by the same reference signs in all the drawings of the following embodiments.
1 First embodiment (example of recording medium)
2 Second embodiment (example of recording medium)
3 Application example
   3-1 Application example 1 (example of card)
   3-2 Application example 2 (example of card)
   3-3 Application example 3 (example of booklet)
   3-4 Application example 4 (example of smartphone)
   3-5 Application example 5 (notebook PC)
   3-6 Application example 6 (example of cosmetic container)
4 Example

### <1 First embodiment>

### [Configuration of recording medium]

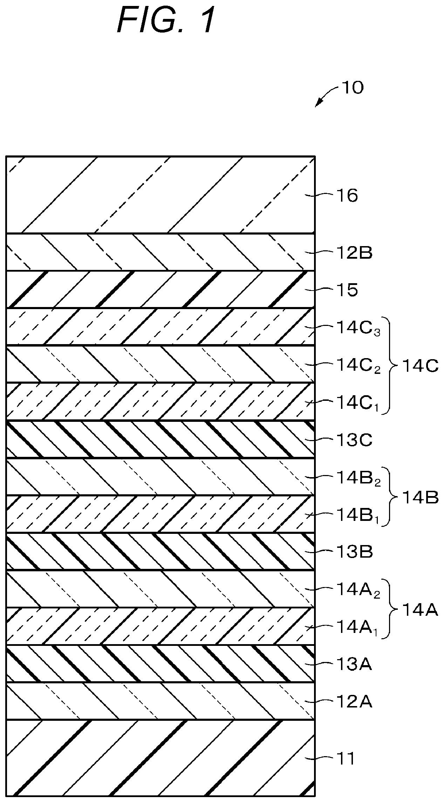

Fig. 1 is a cross-sectional view illustrating an example of a configuration of a recording medium 10 according to a first embodiment. The recording medium 10 sequentially includes a base material 11, a pressure-sensitive adhesive layer 12A, a recording layer 13A, an intermediate layer 14A, a recording layer 13B, an intermediate layer 14B, a recording layer 13C, an intermediate layer 14C, an ultraviolet cut layer (hereinafter, referred to as a "UV cut layer") 15, a pressure-sensitive adhesive layer 12B, and a cover layer 16. Note that the base material 11, the pressure-sensitive adhesive layer 12A, the intermediate layer 14C, the UV cut layer 15, the pressure-sensitive adhesive layer 12B, and the cover layer 16 are provided as necessary.

### (Base material 11)

The base material 11 may be a support base material that supports each layer provided on the base material 11. The base material 11 preferably contains a material having excellent heat resistance and excellent dimensional stability in the planar direction. The base material 11 may be either transmissive or non-transmissive characteristics with respect to visible light. In the present specification, visible light refers to light in a wavelength range of 360 nm or more and 780 nm or less. The base material 11 may have a predetermined color such as white. The base material 11 has, for example, a plate shape or a film shape. Note that the film is defined to include a sheet in the present disclosure.

The base material 11 may have, for example, rigidity or flexibility. In a case where the base material 11 has flexibility, a flexible recording medium 10 can be realized. Examples of the base material 11 having rigidity include a wafer, a glass substrate, and the like. Examples of the base material 11 having flexibility include flexible glass, a film, paper, and the like.

The base material 11 contains, for example, at least one selected from the group including an inorganic material, a metal material, a polymer material, and the like. The inorganic material includes, for example, at least one selected from the group including silicon (Si), silicon oxide (SiO_{X}), silicon nitride (SiN_{X}), aluminum oxide (AlO_{X}), and the like. The silicon oxide includes, for example, at least one selected from the group including glass, spin-on-glass (SOG), and the like. The metal material includes, for example, at least one selected from the group including aluminum (Al), nickel (Ni), stainless steel, and the like. The polymer material includes, for example, at least one selected from the group including polycarbonate (PC) resin, polyethylene terephthalate (PET) resin, polyethylene naphthalate (PEN) resin, polyethyl ether ketone (PEEK) resin, polyvinyl chloride (PVC) resin, and the like.

Note that a reflection layer (not illustrated) may be provided on at least one of a first surface or a second surface of the base material 11, or the base material 11 itself may also function as a reflection layer. The base material 11 having such a configuration enables clearer color display.

### (Recording layers 13A, 13B, 13C)

The recording layers 13A, 13B, and 13C are configured to be able to change a colored state by an external stimulus. The external stimulus is, for example, laser light. The recording layers 13A, 13B, and 13C in a recorded state are in a color-developed state, and the recording layers 13A, 13B, and 13C in a non-recorded state are in a non-colored state. The recording layers 13A, 13B, and 13C can be changed from the non-colored state to the color-developed state by the external stimulus. The non-colored state may be a state in which the laser light and visible light can be transmitted. The change in the colored state may be a reversible change or an irreversible change. From the viewpoint of improving forgery prevention, the change in the colored state is preferably an irreversible change. That is, from the viewpoint of improving forgery prevention, the recording medium 10 is preferably of a write once type which allows for writing of a pattern or the like only once.

The recording layers 13A, 13B, and 13C can individually exhibit hues different from each other in the color-developed state. Specifically, the recording layer 13A can exhibit a magenta color in the color-developed state. The recording layer 13B can exhibit a cyan color in the color-developed state. The recording layer 13C can exhibit a yellow color in the color-developed state. Magenta color, cyan color, and yellow color are examples of the first primary color, the second primary color, and the third primary color, respectively. The first primary color, the second primary color, and the third primary color may be three primary colors of colors. The first primary color, the second primary color, and the third primary color may be colors other than magenta color, cyan color, and yellow color. Laser light capable of changing the recording layer 13A to the color-developed state, laser light capable of changing the recording layer 13B to the color-developed state, and laser light capable of changing the recording layer 13C to the color-developed state have peak wavelengths different from each other.

Thicknesses of the recording layers 13A, 13B, and 13C are each preferably 1 µm or more and 20 µm or less, and more preferably 2 µm or more and 15 µm or less. With the recording layers 13A, 13B, and 13C having a thickness of 1 µm or more, a color development density can be improved. Whereas, with the recording layers 13A, 13B, and 13C having a thickness of 20 µm or less, an increase in a heat utilization amount of the recording layers 13A, 13B, and 13C can be prevented, and deterioration in color developability can be prevented.

The recording layer 13A is configured to be able to perform recording with first laser light having a first peak wavelength λ₁. The recording layer 13A contains a first coloring compound having an electron-donating property, a first developer having an electron-accepting property, and a first photothermal conversion agent. The recording layer 13A preferably further contains a first matrix resin.

The recording layer 13B is configured to be able to perform recording with second laser light having a second peak wavelength λ₂. The recording layer 13B contains a second coloring compound having an electron-donating property, a second developer having an electron-accepting property, and a second photothermal conversion agent. The recording layer 13B preferably further contains a second matrix resin.

The recording layer 13C is configured to be able to perform recording with third laser light having a third peak wavelength λ₃. The recording layer 13C contains a third coloring compound having an electron-donating property, a third developer having an electron-accepting property, and a third photothermal conversion agent. The recording layer 13C preferably further contains a third matrix resin.

The first laser light, the second laser light, and the third laser light are preferably near-infrared laser light. The first peak wavelength λ₁, the second peak wavelength λ₂, and the third peak wavelength λ₃ are preferably included in a near-infrared range. Upper limit values of the first peak wavelength λ₁, the second peak wavelength λ₂, and the third peak wavelength λ₃ are, for example, 2000 nm or less. Lower limit values of the first peak wavelength λ₁, the second peak wavelength λ₂, and the third peak wavelength λ₃ are, for example, 700 nm or more.

The first peak wavelength λ₁, the second peak wavelength λ₂, and the third peak wavelength λ₃ are different from each other. As a result, recording can be independently performed on the recording layer 13A, the recording layer 13B, and the recording layer 13C. The first peak wavelength λ₁, the second peak wavelength λ₂, and the third peak wavelength λ₃ preferably satisfy λ₃ < λ₂ < λ₁.

### (First, second, and third coloring compounds)

The first, second, and third coloring compounds can develop color by reacting with the first, second, and third developers, respectively. The first, second, and third coloring compounds can exhibit hues different from each other in the color-developed state. Specifically, the first coloring compound can exhibit a magenta color in the color-developed state. The second coloring compound can exhibit a cyan color in the color-developed state. The third coloring compound can exhibit a yellow color in the color-developed state.

The first, second, and third coloring compounds are, for example, leuco dyes. The leuco dye develops color when a lactone ring in a molecule reacts with an acid to be ring-opened. The leuco dye may be decolored when the open lactone ring reacts with a base to be ring-closed. The leuco dye may be, for example, an existing dye for thermosensitive paper.

The first, second, and third coloring compounds can be appropriately selected according to the purpose, without any limitation. The first, second, and third coloring compounds contain, for example, at least one selected from the group including fluoran compounds, triphenylmethane phthalide compounds, azaphthalide compounds, phenothiazine compounds, leucoauramine compounds, indolinophthalide compounds, and the like. Besides, the first, second, and third coloring compounds may contain, for example, at least one selected from the group including 2-anilino-3-methyl-6-diethylaminofluoran, 2-anilino-3-methyl-6-di(n-butylamino)fluoran, 2-anilino-3-methyl-6-(N-n-propyl-N-methylamino)fluoran, 2-anilino-3-methyl-6-(N-isopropyl-N-methylamino)fluoran, 2-anilino-3-methyl-6-(N-isobutyl-N-methylamino)fluoran, 2-anilino-3-methyl-6-(N-n-amyl-N-methylamino)fluoran, 2-anilino-3-methyl-6-(N-sec-butyl-N-methylamino)fluoran, 2-anilino-3-methyl-6-(N-n-amyl-N-ethylamino)fluoran, 2-anilino-3-methyl-6-(N-iso-amyl-N-ethylamino)fluoran, 2-anilino-3-methyl-6-(N-n-propyl-N-isopropylamino)fluoran, 2-anilino-3-methyl-6-(N-cyclohexyl-N-methylamino)fluoran, 2-anilino-3-methyl-6-(N-ethyl-p-toluidino)fluoran, 2-anilino-3-methyl-6-(N-methyl-p-toluidino)fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino)fluoran, 2-(2,4-dimethylanilino)-3-methyl-6-diethylaminofluoran, 2-(N-ethyl-p-toluidino)-3-methyl-6-(N-ethylanilino)fluoran, 2-(N-ethyl-p-toluidino)-3-methyl-6-(N-propyl-p-toluidino)fluoran, 2-anilino-6-(N-n-hexyl-N-ethylamino)fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino)fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino)fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino)fluoran, 3-(1-ethyl-2-methylindol-3-yl)-3-(2-ethoxy-4-diethylaminophenyl)-4-azaphthalide, 3-(1-ethyl-2-methylindol-3-yl)-3-(2-ethoxy-4-diethylaminophenyl)-7-azaphthalide, 3-(1-octyl-2-methylindol-3-yl)-3-(2-ethoxy-4-diethylaminophenyl)-4-azaphthalide, 3-(1-ethyl-2-methylindol-3-yl)-3-(2-methyl-4-diethylaminophenyl)-4-azaphthalide, 3-(1-ethyl-2-methylindol-3-yl)-3-(2-methyl-4-diethylaminophenyl)-7-azaphthalide, 3-(1-ethyl-2-methylindol-3-yl)-3-(4-diethylaminophenyl)-4-azaphthalide, 3-(1-ethyl-2-methylindol-3-yl)-3-(4-N-n-amyl-N-methylaminophenyl)-4-azaphthalide, 3-(1-methyl-2-methylindol-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino)fluoran, 2-benzylamino-6-(N-ethyl-p-toluidino)fluoran, 2-benzylamino-6-(N-methyl-2,4-dimethylanilino)fluoran, 2-benzylamino-6-(N-ethyl-2,4-dimethylanilino)fluoran, 2-benzylamino-6-(N-methyl-p-toluidino)fluoran, 2-benzylamino-6-(N-ethyl-p-toluidino)fluoran, 2-(di-p-methylbenzylamino)-6-(N-ethyl-p-toluidino)fluoran, 2-(α-phenylethylamino)-6-(N-ethyl-p-toluidino)fluoran, 2-methylamino-6-(N-methylanilino)fluoran, 2-methylamino-6-(N-ethylanilino)fluoran, 2-methylamino-6-(N-propylanilino)fluoran, 2-ethylamino-6-(N-methyl-p-toluidino)fluoran, 2-methylamino-6-(N-methyl-2,4-dimethylanilino)fluoran, 2-ethylamino-6-(N-ethyl-2,4-dimethylanilino)fluoran, 2-dimethylamino-6-(N-methylanilino) fluoran, 2-dimethylamino-6-(N-ethylanilino)fluoran, 2-diethylamino-6-(N-methyl-p-toluidino)fluoran, 2-diethylamino-6-(N-ethyl-p-toluidino)fluoran, 2-dipropylamino-6-(N-methylanilino) fluoran, 2-dipropylamino-6-(N-ethylanilino)fluoran, 2-amino-6-(N-methylanilino)fluoran, 2-amino-6-(N-ethylanilino)fluoran, 2-amino-6-(N-propylanilino)fluoran, 2-amino-6-(N-methyl-p-toluidino)fluoran, 2-amino-6-(N-ethyl-p-toluidino)fluoran, 2-amino-6-(N-propyl-p-toluidino)fluoran, 2-amino-6-(N-methyl-p-ethylanilino)fluoran, 2-amino-6-(N-ethyl-p-ethylanilino)fluoran, 2-amino-6-(N-propyl-p-ethylanilino)fluoran, 2-amino-6-(N-methyl-2,4-dimethylanilino)fluoran, 2-amino-6-(N-ethyl-2,4-dimethylanilino)fluoran, 2-amino-6-(N-propyl-2,4-dimethylanilino)fluoran, 2-amino-6-(N-methyl-p-chloroanilino)fluoran, 2-amino-6-(N-ethyl-p-chloroanilino)fluoran, 2-amino-6-(N-propyl-p-chloroanilino)fluoran, 1,2-benzo-6-(N-ethyl-N-isoamylamino)fluoran, 1,2-benzo-6-dibutylaminofluoran, 1,2-benzo-6-(N-methyl-N-cyclohexylamino)fluoran, 1,2-benzo-6-(N-ethyl-N-toluidino)fluoran, and the like.

### (First, second, and third developers)

The first, second, and third developers can cause the first, second, and third coloring compounds in the non-colored state to develop color, respectively. The types of the first, second, and third developers may be the same or different from each other. The first, second, and third developers are compounds including an electron-accepting group in the molecule. The electron-accepting moieties of the first, second, and third developers react with the lactone rings of the first, second, and third coloring compounds, respectively, and the lactone rings are ring-opened, whereby the first, second, and third coloring compounds develop color. The first, second, and third developers contain, for example, at least one selected from the group including a phenol derivative, a salicylic acid derivative, a urea derivative, and the like.

Specifically, for example, the developer contains a compound represented by the following formula (1): 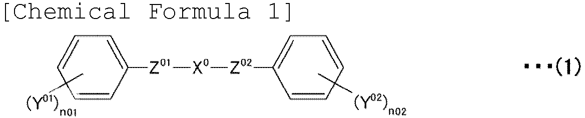 (where, in the formula (1), X⁰ is a divalent group including at least one benzene ring; Y⁰¹ and Y⁰² are each independently a monovalent group; n01 and n02 are each independently any integer of 0 to 5; in a case where n01 is any integer of 2 to 5, Y⁰¹ may be the same as or different from each other; in a case where n02 is any integer of 2 to 5, Y⁰² may be the same as or different from each other; and Z⁰¹ and Z⁰² are each independently a hydrogen bonding group).

With X⁰ including at least one benzene ring, the melting point can be increased as compared with the case where X⁰ is an aliphatic hydrocarbon group (for example, a normal alkyl chain), so that the color development retention characteristics at the time of high temperature and high humidity storage (hereinafter, referred to as "high temperature and high humidity storage characteristics") can be improved. From the viewpoint of improving the high temperature and high humidity storage characteristics and heat resistance, X⁰ preferably includes at least two benzene rings. The high temperature and high humidity storage characteristics are, for example, storage characteristics under an environment of 80°C and 60%RH. The increase in the heat resistance leads to an improvement in the resistance of the recording medium 10 to a severe process (for example, heat-pressing, integral molding using a molten resin or the like, or the like). In a case where X⁰ includes at least two benzene rings, the at least two benzene rings may be fused. For example, naphthalene or anthracene may be used.

With Z⁰¹ and Z⁰² being each independently a hydrogen bonding group, the developers are likely to exist while being gathered to some extent via hydrogen bonds, so that the stability of the developers in the recording layers 13A, 13B, and 13C is improved. In the present specification, the hydrogen bonding group means a functional group including an atom capable of hydrogen bonding with an atom present in another functional group, another compound, or the like.

The developer preferably contains a compound represented by the following formula (2): 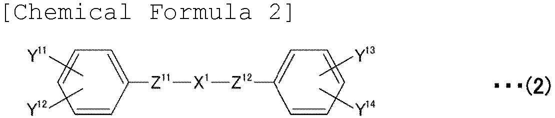 (where, in the formula (2), X¹ is a divalent group including at least one benzene ring; Y¹¹, Y¹², Y¹³, and Y¹⁴ are each independently a monovalent group; and Z¹¹ and Z¹² are each independently a hydrogen bonding group).

With X¹ including at least one benzene ring, the melting point can be increased as compared with the case where X¹ is an aliphatic hydrocarbon group (for example, a normal alkyl chain), so that the high temperature and high humidity storage characteristics can be improved. From the viewpoint of improving the high temperature and high humidity storage characteristics and heat resistance, X¹ preferably includes at least two benzene rings. In a case where X¹ includes at least two benzene rings, the at least two benzene rings may be fused. For example, naphthalene or anthracene may be used.

With Z¹¹ and Z¹² being each independently a hydrogen bonding group, the developers are likely to exist while being gathered to some extent via hydrogen bonds, so that the stability of the developers in the recording layers 13A, 13B, and 13C is improved.

In a case where the formula (1) and the formula (2) include a hydrocarbon group, the hydrocarbon group is a generic term for groups including carbon (C) and hydrogen (H), and may be a saturated hydrocarbon group or an unsaturated hydrocarbon group. The saturated hydrocarbon group is an aliphatic hydrocarbon group having no carbon-carbon multiple bond, and the unsaturated hydrocarbon group is an aliphatic hydrocarbon group having a carbon-carbon multiple bond (carbon-carbon double bond or carbon-carbon triple bond).

In a case where the formula (1) and the formula (2) include a hydrocarbon group, the hydrocarbon group may be a chain or may include one or two or more rings. The chain may be a linear chain, or may be a branched chain having one or two or more side chains or the like.

### (X⁰, X¹ with one benzene ring)

X⁰ in the formula (1) and X¹ in the formula (2) are, for example, a divalent group including one benzene ring. The divalent group is represented by, for example, the following formula (3): 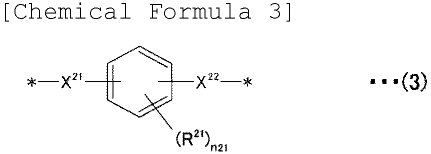 (where, in the formula (3), X²¹ may be present or absent, and in a case where X²¹ is present, X²¹ is a divalent group; X²² may be present or absent, and in a case where X²² is present, X²² is a divalent group; R²¹ is a monovalent group; n21 is any integer of 0 to 4; in a case where n21 is any integer of 2 to 4, R²¹ may be the same as or different from each other; and * denotes a bonding portion).

In the formula (3), the bonding positions of X²¹ and X²² on the benzene ring are not limited. That is, the bonding positions of X²¹ and X²² on the benzene ring may be any of ortho positions, meta positions, and para positions.

From the viewpoint of improving high temperature and high humidity storage characteristics, the above-described divalent group including one benzene ring is preferably represented by the following formula (4): 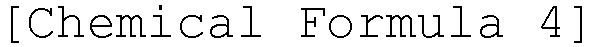 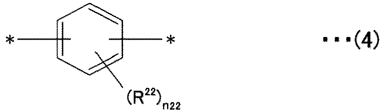 (where, in the formula (4), R²² is a monovalent group; n22 is any integer of 0 to 4; in a case where n22 is any integer of 2 to 4, R²² may be the same as or different from each other; and * denotes a bonding portion).

In a case where X⁰ in the formula (1) is a divalent group including one benzene ring, the bonding positions of Z⁰¹ and Z⁰² on the benzene ring in the formula (4) are not limited. That is, the bonding positions of Z⁰¹ and Z⁰² on the benzene ring may be any of ortho positions, meta positions, and para positions.

In a case where X¹ in the formula (2) is a divalent group including one benzene ring, the bonding positions of Z¹¹ and Z¹² on the benzene ring in the formula (4) are not limited. That is, the bonding positions of Z¹¹ and Z¹² on the benzene ring may be any of ortho positions, meta positions, and para positions.

### (X²¹, X²²)

X²¹ and X²² in the formula (3) are only required to be each independently a divalent group without limitation, and examples thereof include a hydrocarbon group optionally having a substituent. The hydrocarbon group is preferably in a chain form. With the hydrocarbon group in a chain form, the melting point of the developer can be reduced, allowing the developer to be dissolved by irradiation with laser light, and therefore the coloring compound readily develops a color. From the viewpoint of reducing the melting point of the developer, a normal alkyl chain is particularly preferable among the chain hydrocarbon groups.

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

In a case where X²¹ and X²² in the formula (3) are normal alkyl groups, the number of carbon atoms of the normal alkyl group is preferably 8 or less, more preferably 6 or less, still more preferably 5 or less, and particularly preferably 3 or less from the viewpoint of high temperature storage stability. It is considered that in a case where the number of carbon atoms of the normal alkyl group is 8 or less, due to the short length of the normal alkyl group, thermal disturbance is less likely to occur in the developer during storage at a high temperature, and a site that interacts with the coloring compound such as the leuco dye at the time of color development is less likely to be separated. Therefore, the coloring compound such as the leuco dye is less likely to be decolored during high temperature storage, and thus high temperature storage stability is improved.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

### (R²¹)

R²¹ in the formula (3) is only required to be a monovalent group without limitation, and examples thereof include a halogen group or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

### (R²²)

R²² in the formula (4) is only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (X⁰, X¹ including two benzene rings)

X⁰ in the formula (1) and X¹ in the formula (2) are, for example, divalent groups including two benzene rings. The divalent group is represented by, for example, the following formula (5): 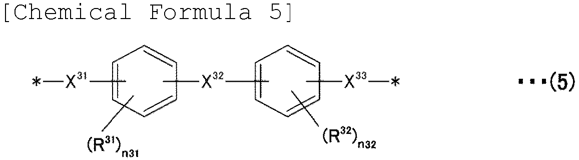 (where, in the formula (5), X³¹ may be present or absent, and in a case where X³¹ is present, X³¹ is a divalent group; X³² may be present or absent, and in a case where X³² is present, X³² is a divalent group; X³³ may be present or absent, and in a case where X³³ is present, X³³ is a divalent group; R³¹ and R³² are each independently a monovalent group; n31 and n32 are each independently any integer of 0 to 4; in a case where n31 is any integer of 2 to 4, R³¹ may be the same as or different from each other; in a case where n32 is any integer of 2 to 4, R³² may be the same as or different from each other; and * denotes a bonding portion).

In the formula (5), the bonding positions of X³¹ and X³² on the benzene ring are not limited. That is, the bonding positions of X³¹ and X³² on the benzene ring may be any of ortho positions, meta positions, and para positions. Similarly, in the formula (5), the bonding positions of X³² and X³³ on the benzene ring are not limited. That is, the bonding positions of X³² and X³³ on the benzene ring may be any of ortho positions, meta positions, and para positions.

From the viewpoint of improving high temperature and high humidity storage characteristics, the above-described divalent group including two benzene rings is preferably represented by the following formula (6): 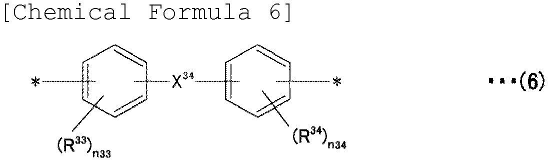 (where, in the formula (6), X³⁴ is a divalent group; R³³ and R³⁴ are each independently a monovalent group; n33 and n34 are each independently any integer of 0 to 4; in a case where n33 is any integer of 2 to 4, R³³ may be the same as or different from each other; in a case where n34 is any integer of 2 to 4, R³⁴ may be the same as or different from each other; and * denotes a bonding portion).

In a case where X⁰ in the formula (1) is a divalent group including two benzene rings, the bonding positions of Z⁰¹ and X³⁴ on the benzene ring in the formula (6) are not limited. That is, the bonding positions of Z⁰¹ and X³⁴ on the benzene ring may be any of ortho positions, meta positions, and para positions. Similarly, in the formula (6), the bonding positions of Z⁰² and X³⁴ on the benzene ring are not limited. That is, the bonding positions of Z⁰² and X³⁴ on the benzene ring may be any of ortho positions, meta positions, and para positions.

In a case where X¹ in the formula (2) is a divalent group including two benzene rings, the bonding positions of Z¹¹ and X³⁴ on the benzene ring in the formula (6) are not limited. That is, the bonding positions of Z¹¹ and X³⁴ on the benzene ring may be any of ortho positions, meta positions, and para positions. Similarly, in the formula (6), the bonding positions of Z¹² and X³⁴ on the benzene ring are not limited. That is, the bonding positions of Z¹² and X³⁴ on the benzene ring may be any of ortho positions, meta positions, and para positions.

### (X³¹, X³², X³³)

X³¹, X³², and X³³ in the formula (5) are only required to be each independently a divalent group without limitation, and examples thereof include a hydrocarbon group optionally having a substituent. The hydrocarbon group is similar to that for X²¹ and X²² in the above formula (3).

### (X³⁴)

X³⁴ in the formula (6) is only required to be a divalent group without limitation, and examples thereof include a hydrocarbon group optionally having a substituent. The hydrocarbon group is similar to that for X²¹ and X²² in the above formula (3).

### (R³¹, R³²)

R³¹ and R³² in the formula (5) are only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (R³³, R³⁴)

R³³ and R³⁴ in the formula (6) are only required to be a monovalent group without limitation, and examples thereof include a halogen group or a hydrocarbon group optionally having a substituent. Each of the halogen group and the hydrocarbon group optionally having a substituent is similar to that for R²¹ in the above formula (3).

### (Y⁰¹, Y⁰²)

Y⁰¹ and Y⁰² in the formula (1) are each independently, for example, a hydrogen group (-H), a hydroxy group (-OH), a halogen group (-X), a carboxy group (-COOH), an ester group (-COOR), or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

Examples of the substituent that the hydrocarbon group optionally has include a halogen group (for example, a fluorine group), an alkyl group having a halogen group (for example, a fluorine group), and the like. The hydrocarbon group optionally having a substituent may be a hydrocarbon group obtained by substituting a part of carbon atoms of the hydrocarbon group (for example, a part of carbon atoms included in a main chain of the hydrocarbon group) with an element such as oxygen.

In the formula (1), it is preferable that one of (Y⁰¹)ₙ₀₁ and/or one of (Y⁰²)ₙ₀₂ is a hydroxy group (-OH). With one of (Y⁰¹)ₙ₀₁ and/or one of (Y⁰²)ₙ₀₂ being a hydroxy group (-OH), display quality and light resistance can be improved.

### (Y¹¹, Y¹², Y¹³, Y¹⁴)

In the formula (2), the bonding positions of Y¹¹ and Y¹² on the benzene ring are not limited. That is, the bonding positions of Y¹¹ and Y¹² on the benzene ring may be any of ortho positions, meta positions, and para positions. Similarly, in the formula (2), the bonding positions of Y¹³ and Y¹⁴ on the benzene ring are also not limited. That is, the bonding positions of Y¹³ and Y¹⁴ on the benzene ring may be any of ortho positions, meta positions, and para positions. In the formula (2), the bonding positions of Y¹¹ and Y¹² on one benzene and the bonding positions of Y¹³ and Y¹⁴ on the other benzene may be the same or different.

Y¹¹, Y¹², Y¹³, and Y¹⁴ in the formula (2) each independently represent, for example, a hydrogen group (-H), a hydroxy group (-OH), a halogen group, a carboxy group (-COOH), an ester group (-COOR), or a hydrocarbon group optionally having a substituent. Each of the halogen group and the hydrocarbon group optionally having a substituent is similar to that for Y⁰¹ and Y⁰² in the above formula (1).

In the formula (2), Y¹¹ and/or Y¹³ is preferably a hydroxy group (-OH). With Y¹¹ and/or Y¹³ being a hydroxy group (-OH), display quality and light resistance can be improved.

### (Z⁰¹, Z⁰²)

Z⁰¹ and Z⁰² in the formula (1) are each independently, for example, a urea bond (-NHCONH-), an amide bond (-NHCO-, -OCHN-), or a hydrazide bond (-NHCOCONH-). From the viewpoint of improving the high temperature and high humidity storage characteristics, Z⁰¹ and Z⁰² are preferably urea bonds. In a case where Z⁰¹ is an amide bond, the nitrogen included in the amide bond may be bonded to benzene, or the carbon included in the amide bond may be bonded to benzene. In a case where Z⁰² is an amide bond, the nitrogen included in the amide bond may be bonded to benzene, or the carbon included in the amide bond may be bonded to benzene.

### (Z¹¹, Z¹²)

Z¹¹ and Z¹² in the formula (2) are each independently, for example, a urea bond (-NHCONH-), an amide bond (-NHCO-, -OCHN-), or a hydrazide bond (-NHCOCONH-). From the viewpoint of improving the high temperature and high humidity storage characteristics,

Z¹¹ and Z¹² are preferably urea bonds. In a case where Z¹¹ is an amide bond, the nitrogen included in the amide bond may be bonded to benzene, or the carbon included in the amide bond may be bonded to benzene. In a case where Z¹² is an amide bond, the nitrogen included in the amide bond may be bonded to benzene, or the carbon included in the amide bond may be bonded to benzene.

### (Specific examples of developer)

Specifically, the developer in which X⁰ in the formula (1) and X¹ in the formula (2) include one benzene ring contains, for example, at least one selected from the group including compounds represented by the following formulas (7-1) to (7-6).

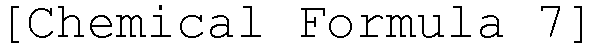

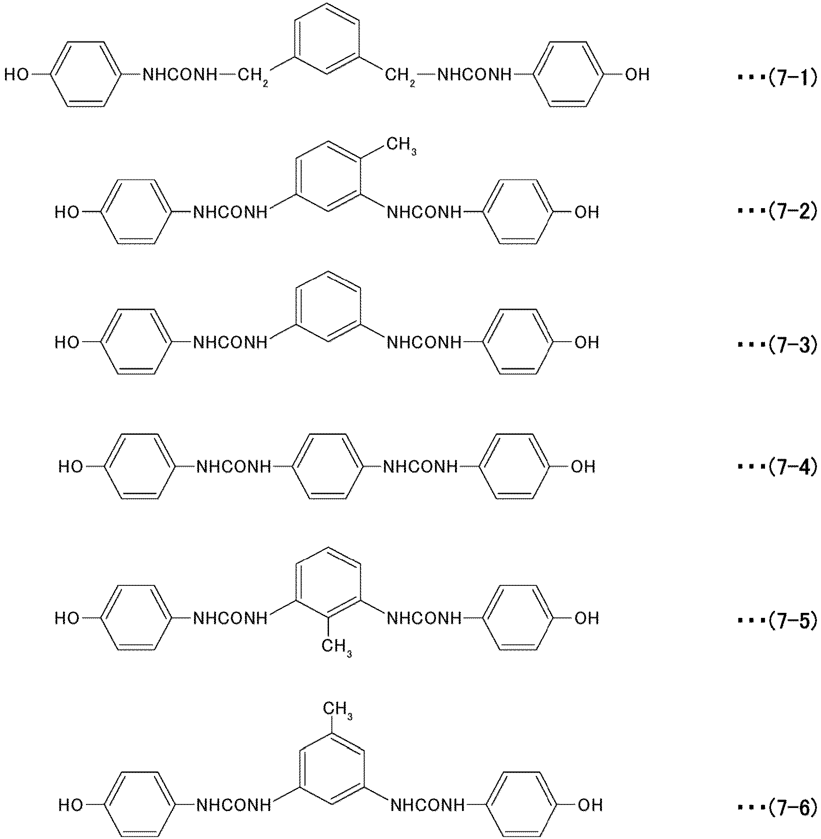

Specifically, the developer in which X⁰ in the formula (1) and X¹ in the formula (2) include two benzene rings contains, for example, at least one selected from the group including compounds represented by the following formulas (8-1) to (8-8).

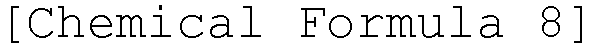

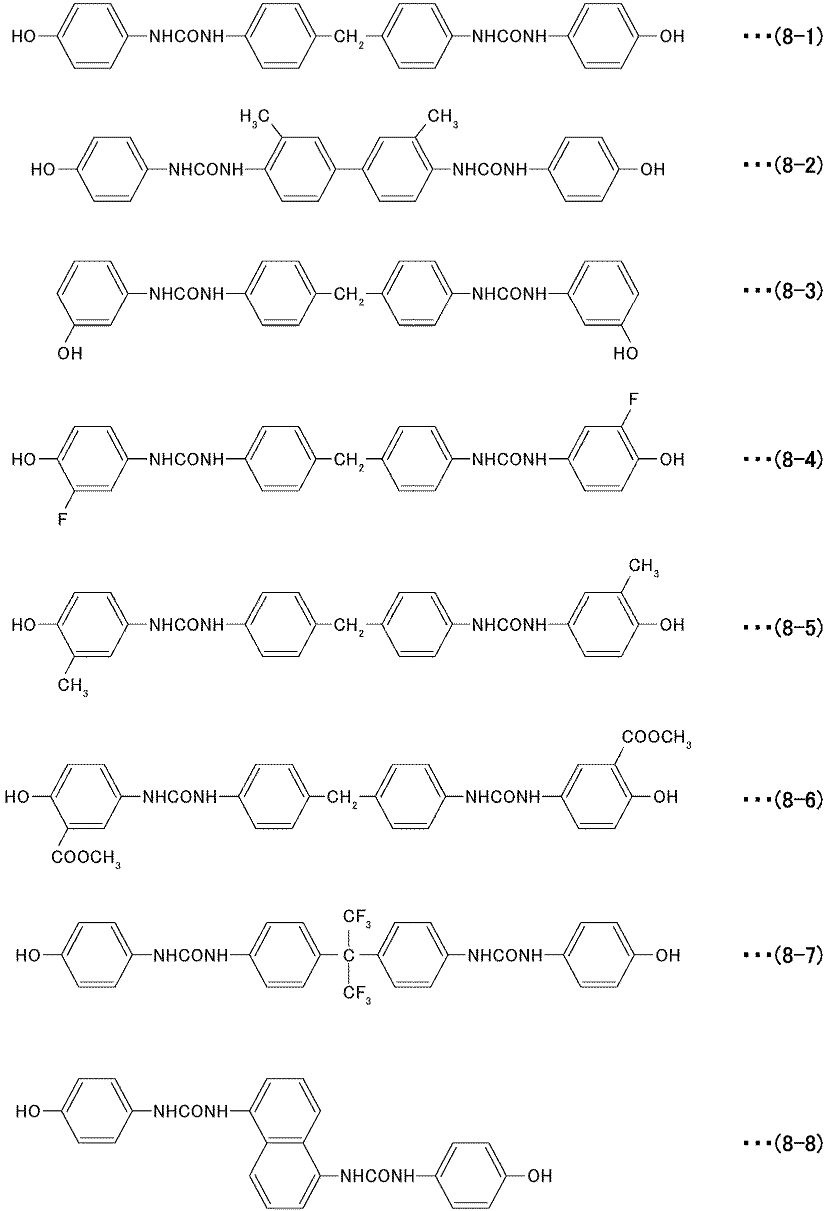

### (First, second, and third photothermal conversion agents)

The first, second, and third photothermal conversion agents can generate heat by absorbing light in a predetermined wavelength region such as a near-infrared region. The first, second, and third photothermal conversion agents have absorption wavelength peaks different from each other. Specifically, the first photothermal conversion agent is capable of absorbing the first laser light having the first peak wavelength λ₁ to generate heat. The absorption wavelength peak of the first photothermal conversion agent may be substantially equal to the above-described first peak wavelength λ₁. The second photothermal conversion agent can absorb the second laser light having the second peak wavelength λ₂ to generate heat. The absorption wavelength peak of the second photothermal conversion agent may be substantially equal to the above-described second peak wavelength λ₂. The third photothermal conversion agent can absorb the third laser light having the third peak wavelength λ₃ to generate heat. The absorption wavelength peak of the third photothermal conversion agent may be substantially equal to the above-described third peak wavelength λ₃. The wavelengths λ₁, λ₂, and λ₃ are different from each other. The absorption wavelength peak is preferably in the near-infrared region. The near-infrared region is, for example, in a wavelength range of 700 nm or more and 2000 nm or less. As described above, since the first, second, and third photothermal conversion agents have absorption wavelength peaks different from each other, a desired layer among the recording layers 13A, 13B, and 13C can be selectively caused to develop color by irradiation with laser light. A near-infrared absorbing dye having almost no absorption in the visible region is preferably employed as the first, second, and third photothermal conversion agents.

The first, second, and third photothermal conversion agents contain, for example, at least one selected from the group including a compound having a cyanine skeleton (cyanine dye), a compound having a phthalocyanine skeleton (phthalocyanine dye), a compound having a squarylium skeleton (squarylium dye), an inorganic compound, and the like. The inorganic compound includes, for example, at least one selected from the group including metal complexes such as dithio complexes, diimmonium salts, aminium salts, graphite, carbon black, metal powder particles, metal oxides such as tricobalt tetraoxide, iron oxide, chromium oxide, copper oxide, titanium black, and indium tin oxide (ITO), metal nitrides such as niobium nitride, metal carbides such as tantalum carbide, metal sulfides, various magnetic powders, and the like.

The first, second, and third photothermal conversion agents preferably have excellent light resistance and heat resistance. Note that the excellent light resistance, as used herein, means that it is not decomposed by, for example, irradiation with light of a fluorescent lamp or the like under a use environment. The excellent heat resistance means that, for example, a film formed together with a polymer material does not change in maximum absorption peak value of the absorption spectrum by 20% or more after stored at 150°C for 30 minutes, for example. Examples of a compound having a cyanine skeleton having characteristics described above include compounds having, in the molecule, at least one of a counter ion being any one of SbF₆, PF₆, BF₄, ClO₄, CF₃SO₃, or (CF₃SO₃)₂N or a methine chain including a 5-membered ring or a 6-membered ring. Note that, although the compound having a cyanine skeleton used for the recording medium 10 in the first embodiment preferably has both any one of the above-described counter ions and a cyclic structure such as a 5-membered ring and a 6-membered ring in a methine chain, sufficient light resistance and heat resistance are secured as long as the compound has at least one of the counter ion or the cyclic structure.

### (First, second, and third matrix resins)

The first, second, and third matrix resins preferably have a function of a binder. The first matrix resin is preferably one in which the first coloring compound, the first developer, and the first photothermal conversion agent are likely to be uniformly dispersed. The second matrix resin is preferably one in which the second coloring compound, the second developer, and the second photothermal conversion agent are likely to be uniformly dispersed. The third matrix resin is preferably one in which the third coloring compound, the third developer, and the third photothermal conversion agent are likely to be uniformly dispersed. The types of the first, second, and third matrix resins may be the same or different from each other.

The first, second, and third matrix resins contain a polycarbonate resin (first polycarbonate resin). With the first, second, and third matrix resins containing a polycarbonate resin, the light resistance of the background of the recording medium 10 can be improved. Here, the polycarbonate resin is a resin having a carbonate group (-O-(C=O)-O-) as a structural unit at least in the main chain. Therefore, other structural units may be included in the main chain in addition to the carbonate group.

The first, second, and third matrix resins may further contain a thermoplastic resin other than the polycarbonate resin. The first, second, and third matrix resins may further contain a thermosetting resin together with the thermoplastic resin. More specifically, for example, the first, second, and third matrix resins contain, together with the polycarbonate resin, at least one selected from the group including, a polyvinyl chloride resin, a polyvinyl acetate resin, a vinyl chloride-vinyl acetate copolymer resin, an ethyl cellulose resin, a polystyrene resin, a styrenic copolymer resin, a phenoxy resin-based resin, a polyester resin, an aromatic polyester resin, a polyurethane resin, a polyacrylic acid ester resin, a polymethacrylic acid ester resin, an acrylic acid copolymer resin, a maleic acid polymer resin, a polyvinyl alcohol resin, a modified polyvinyl alcohol resin, a hydroxyethyl cellulose resin, a carboxymethyl cellulose resin starch, and the like.

### (Additive)

The recording layers 13A, 13B, and 13C may further contain at least one additive selected from the group including a sensitizer, an ultraviolet absorber, and the like, as necessary. The recording layers 13A, 13B, and 13C preferably contain an amine compound from the viewpoint of preventing coloring of the background.

In a case where the recording layers 13A, 13B, and 13C contain an amine compound, it is preferable that the recording layers 13A, 13B, and 13C contain at least one compound selected from the group including an epoxy compound and a carbodiimide compound together with the amine compound. In a case where the recording layers 13A, 13B, and 13C contain an amine compound, there is a possibility that the reliability of a color-developed portion during high temperature and high humidity storage is deteriorated. However, in a case where the recording layers 13A, 13B, and 13C contain at least one compound selected from the group including an epoxy compound and a carbodiimide compound together with the amine compound, the deterioration in reliability of the color-developed portion during high temperature and high humidity storage due to the amine compound can be prevented.

### (Pressure-sensitive adhesive layer 12A, 12B)

The pressure-sensitive adhesive layer 12A is provided between the base material 11 and the recording layer 13A. The pressure-sensitive adhesive layer 12A bonds the base material 11 and the recording layer 13A together. The pressure-sensitive adhesive layer 12A may be either transmissive or non-transmissive with respect to laser light used for drawing on the recording medium 10 and visible light.

The pressure-sensitive adhesive layer 12B is provided between the UV cut layer 15 and the cover layer 16. The pressure-sensitive adhesive layer 12B bonds the UV cut layer 15 and the cover layer 16 together. The pressure-sensitive adhesive layer 12A is preferably transmissive with respect to laser light used for drawing on the recording medium 10 and visible light.

The pressure-sensitive adhesive layers 12A and 12B are, for example, double-sided adhesive films such as optical clear adhesive (OCA).

### (Intermediate layer 14A, 14B, 14C)

The intermediate layer 14A is provided between the recording layer 13A and the recording layer 13B. The intermediate layer 14A can suppress diffusion of a constituent material between the recording layer 13A and the recording layer 13B. The intermediate layer 14A may be able to insulate heat between the recording layer 13A and the recording layer 13B.

The intermediate layer 14B is provided between the recording layer 13B and the recording layer 13C. The intermediate layer 14B can suppress diffusion of a constituent material between the recording layer 13B and the recording layer 13C. The intermediate layer 14B may be able to insulate heat between the recording layer 13B and the recording layer 13C.

The intermediate layer 14C is provided between the recording layer 13C and the UV cut layer 15. The intermediate layer 14C can suppress diffusion of the constituent material between the recording layer 13C and the UV cut layer 15. The intermediate layer 14C may be able to insulate heat between the recording layer 13C and the UV cut layer 15.

The intermediate layers 14A, 14B, and 14C are preferably transmissive with respect to laser light used for drawing on the recording medium 10 and visible light.

Thicknesses of the intermediate layers 14A, 14B, and 14C are each independently preferably 3 µm or more and 100 µm or less, and more preferably 5 µm or more and 50 µm or less. With the intermediate layers 14A, 14B, and 14C having a thickness of 3 µm or more, a sufficient diffusion suppressing effect can be obtained, and a sufficient heat insulating effect can be obtained. Whereas, with the intermediate layers 14A, 14B, and 14C having a thickness of 50 µm or less, deterioration of translucency can be suppressed. Furthermore, it is also possible to suppress a decrease in bending resistance of the recording medium 10 and to make defects such as cracks less likely to occur. The thicknesses of the intermediate layers 14A, 14B, and 14C may be the same or different from each other.

The intermediate layer 14A sequentially includes a resin layer 14A₁ and a pressure-sensitive adhesive layer 14A₂ on the recording layer 13A. The resin layer 14A₁ can suppress diffusion of a constituent material (for example, the first and second coloring compounds and the like) between the recording layer 13A and the recording layer 13B. The resin layer 14A₁ may be able to insulate heat between the recording layer 13A and the recording layer 13B. The pressure-sensitive adhesive layer 14A₂ bonds the resin layer 14A₁ and the recording layer 13B together. The pressure-sensitive adhesive layer 14A₂ may be able to insulate heat between the recording layer 13A and the recording layer 13B.

The intermediate layer 14B sequentially includes a resin layer 14B₁ and a pressure-sensitive adhesive layer 14B₂ on the recording layer 13B. The resin layer 14B₁ can suppress diffusion of a constituent material (for example, the second and third coloring compounds and the like) between the recording layer 13B and the recording layer 13C. The resin layer 14B₁ may be able to insulate heat between the recording layer 13B and the recording layer 13C. The pressure-sensitive adhesive layer 14B₂ bonds the resin layer 14B₁ and the recording layer 13C together. The pressure-sensitive adhesive layer 14B₂ may be able to insulate heat between the recording layer 13B and the recording layer 13C.

The intermediate layer 14C sequentially includes a resin layer 14C₁, a pressure-sensitive adhesive layer 14C₂, and a resin layer 14C₃ on the recording layer 13C. The resin layers 14C₁ and 14C₃ can suppress diffusion of a constituent material (for example, the third coloring compound or the like) between the recording layer 13C and the UV cut layer 15.

The resin layers 14C₁ and 14C₃ may be able to insulate heat between the recording layer 13C and the UV cut layer 15. The pressure-sensitive adhesive layer 14C₂ bonds the resin layer 14C₁ and the resin layer 14C₃ together. The pressure-sensitive adhesive layer 14C₂ may be able to insulate heat between the recording layer 13C and the UV cut layer 15.

The pressure-sensitive adhesive layers 14A₂, 14B₂, and 14C₂ are, for example, double-sided adhesive films such as optical clear adhesive (OCA).

The resin layer 14A₁ preferably has solubility in methyl ethyl ketone. Since the resin layer 14A₁ has solubility in methyl ethyl ketone, a first compatible region can be formed between the recording layer 13A and the resin layer 14A₁ by applying a first recording layer-forming coating material containing methyl ethyl ketone onto the resin layer 14A₁ in a manufacturing step of the recording medium 10. Details of the first compatible region will be described later.

Whether the resin layer 14A₁ has solubility in methyl ethyl ketone can be confirmed as follows. First, a surface of the resin layer 14A1 is exposed by peeling the pressure-sensitive adhesive layer 14A₂ from the surface of the resin layer 14A₁ or polishing the recording medium 10 with a microtome or the like, and then a cotton swab impregnated with methyl ethyl ketone is pressed against the exposed surface and reciprocated a plurality of times (for example, reciprocated 50 times or more). Thereafter, whether or not a lower layer (recording layer 13A) of the resin layer A₁ is exposed is checked. In a case where the lower layer is exposed, it is determined that the resin layer 14A₁ has solubility in methyl ethyl ketone.

The resin layer 14B₁ preferably has solubility in methyl ethyl ketone. Since the resin layer 14B₁ has solubility in methyl ethyl ketone, a second compatible region can be formed between the recording layer 13B and the resin layer 14B₁ by applying a second recording layer-forming coating material containing methyl ethyl ketone onto the resin layer 14B₁ in the manufacturing step of the recording medium 10. Details of the second compatible region will be described later.

Whether the resin layer 14B₁ has solubility in methyl ethyl ketone can be confirmed by a procedure similar to that for the solubility of the above-described resin layer 14A₁.

The resin layer 14C₁ preferably has solubility in methyl ethyl ketone. Since the resin layer 14C₁ has solubility in methyl ethyl ketone, a third compatible region can be formed between the recording layer 13C and the resin layer 14C₁ by applying a third recording layer-forming coating material containing methyl ethyl ketone onto the resin layer 14C₁ in the manufacturing step of the recording medium 10. Details of the third compatible region will be described later.

Whether the resin layer 14C₁ has solubility in methyl ethyl ketone can be confirmed by a procedure similar to that for the solubility of the above-described resin layer 14A₁.

The resin layers 14A₁, 14B₁, and 14C₁ contain an ultraviolet curable resin solidified by a polymerization reaction and a polycarbonate resin (second polycarbonate resin) as a thermoplastic resin. More specifically, for example, the resin layers 14A₁, 14B₁, and 14C₁ contain: a polymer of a polymerizable compound; one in which a polymerization initiator generates an active species by irradiation with external energy (ultraviolet rays) to change a structure; and a polycarbonate resin. Since the resin layers 14A₁, 14B₁, and 14C₁ contain a polycarbonate resin, a peel strength at an interface between the recording layer 13A and the resin layer 14A₁, an interface between the recording layer 13B and the resin layer 14B₁, and an interface between the recording layer 13C and the resin layer 14C₁ can be increased as compared with a case where the resin layers 14A₁, 14B₁, and 14C₁ contain only an ultraviolet curable resin. Therefore, it is possible to make it difficult to illicitly separate the recording medium 10 on each of the interfaces described above.

### (Ultraviolet curable resin)

The ultraviolet curable resin composition contains, for example, at least one selected from the group including a radical polymerization ultraviolet curable resin composition, a cationic polymerization ultraviolet curable resin composition, and the like. If necessary, the ultraviolet curable resin composition may contain at least one selected from the group including a sensitizer, a filler, a stabilizer, a leveling agent, a defoaming agent, a viscosity modifier, and the like. The ultraviolet curable resin preferably contains an ultraviolet curable resin for a hard coat, from the viewpoint of suppressing material diffusion between layers via the resin layers 14A₁, 14B₁, and 14C₁.

The polymerizable compound includes, for example, at least one of a monofunctional polymerizable compound or a polyfunctional polymerizable compound. A lower limit value of the number of functional groups of the polymerizable compound is preferably two or more, more preferably three or more, and still more preferably four or more. When the number of functional groups of the polymerizable compound is two or more, a crosslinking density of the resin layers 14A₁, 14B₁, and 14C₁ can be increased, so that the function of the resin layers 14A₁, 14B₁, and 14C₁ as a diffusion inhibiting layer can be improved. An upper limit value of the number of functional groups of the polymerizable compound is, for example, eight or less, seven or less, or six or less.

The polymerizable compound may contain one polymerizable compound or two or more polymerizable compounds. The ultraviolet curable resin contains a polymerizable compound having at least one ultraviolet reactive group. For example, the ultraviolet curable resin contains, as the polymerizable compound, at least one selected from the group including a monomer having at least one ultraviolet reactive group, an oligomer having at least one ultraviolet reactive group, and a prepolymer having at least one ultraviolet reactive group. The at least one ultraviolet reactive group includes, for example, at least one selected from the group including a radical polymerization reactive group having an ethylenically unsaturated bond, a cationic polymerization reactive group, and the like. The at least one radical polymerization reactive group having an ethylenically unsaturated bond includes, for example, at least one selected from the group including an acryloyl group, a methacryloyl group, an allyl group, a vinyl group, and the like. Among them, at least one selected from the group including an acryloyl group, a methacryloyl group, and an oxetanyl group is preferable, and at least one selected from the group including an acryloyl group and a methacryloyl group is more preferable. That is, (meth)acrylate is more preferable. Note that, in the present specification, the (meth)acrylate is a generic term for acrylate, methacrylate, and mixtures of these. The at least one cationic polymerization reactive group includes, for example, an oxetanyl group.

Examples of the (meth)acrylate include urethane (meth)acrylate, silicone (meth)acrylate, alkyl (meth)acrylate, aryl (meth)acrylate, and the like. The (meth)acrylate may include only monofunctional (meth)acrylate, may contain polyfunctional (meth)acrylate, or may contain a combination of monofunctional (meth)acrylate and polyfunctional (meth)acrylate. The (meth)acrylate more preferably contains a polyfunctional (meth)acrylate.

Examples of the monofunctional (meth)acrylate include methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, isobornyl (meth)acrylate, 1-adamantyl (meth)acrylate, 2-methyl-2 adamantyl (meth)acrylate, 2-ethyl-2 adamantyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 1-naphthylmethyl (meth)acrylate, 2-naphthylmethyl (meth)acrylate, phenoxyethyl (meth)acrylate, phenoxy-2 methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2 hydroxypropyl (meth)acrylate, 2-hydroxyethyl (meth)acrylate, 2-hydroxypropyl (meth)acrylate, 2-hydroxybutyl (meth)acrylate, tetrahydrofurfuryl (meth)acrylate, butoxyethyl (meth)acrylate, ethoxydiethylene glycol (meth)acrylate, polyethylene glycol mono (meth)acrylate, polypropylene glycol mono (meth)acrylate, methoxyethylene glycol (meth)acrylate, ethoxyethyl (meth)acrylate, methoxy polyethylene glycol (meth)acrylate, methoxy polypropylene glycol (meth)acrylate, and the like.

Examples of the polyfunctional (meth)acrylate include bifunctional (meth)acrylate, trifunctional (meth)acrylate, tetrafunctional (meth)acrylate, and the like. More specifically, the examples include 1,4-butanediol di(meth)acrylate, 1,6-hexanediol di(meth)acrylate, 1,9-nonanediol di(meth)acrylate, ethylene glycol di(meth)acrylate, diethylene glycol di(meth)acrylate, neopentyl glycol di(meth)acrylate, triethylene glycol di(meth)acrylate, tetraethylene glycol di(meth)acrylate, polyethylene glycol di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol tetra(meth)acrylate, tripentaerythritol penta(meth)acrylate, tripentaerythritol hexa(meth)acrylate, tripentaerythritol hepta(meth)acrylate, tripentaerythritol octa(meth)acrylate, and the like.

A lower limit value of the content of the ultraviolet curable resin in the resin layer 14A₁ is preferably 67 mass% or more, and more preferably 75 mass% or more. When the content of the ultraviolet curable resin in the resin layer 14A₁ is 67 mass% or more, a function of the resin layer 14A₁ as a diffusion inhibiting layer can be improved by increasing a crosslinking density of the resin layer 14A₁. Therefore, it is possible to suppress a decrease in drawing property and a change in color gamut.

An upper limit value of the content of the ultraviolet curable resin in the resin layer 14A₁ is preferably 85 mass% or less, and more preferably 80 mass% or less. When the content of the ultraviolet curable resin in the resin layer 14A₁ is 85 mass% or less, a decrease in content of the polycarbonate resin in the resin layer 14A₁ can be suppressed.

A lower limit value of a content of the ultraviolet curable resin in the resin layer 14B₁ is preferably 67 mass% or more, and more preferably 75 mass% or more. When the content of the ultraviolet curable resin in the resin layer 14B₁ is 67 mass% or more, a function of the resin layer 14B₁ as a diffusion inhibiting layer can be improved by increasing a crosslinking density of the resin layer 14B₁. Therefore, it is possible to suppress a decrease in drawing property and a change in color gamut.

An upper limit value of the content of the ultraviolet curable resin in the resin layer 14B₁ is preferably 85 mass% or less, and more preferably 80 mass% or less. When the content of the ultraviolet curable resin in the resin layer 14B₁ is 85 mass% or less, a decrease in content of the polycarbonate resin in the resin layer 14B₁ can be suppressed.

A lower limit value of a content of the ultraviolet curable resin in the resin layer 14C₁ is preferably 67 mass% or more, and more preferably 75 mass% or more. When the content of the ultraviolet curable resin in the resin layer 14C₁ is 67 mass% or more, a function of the resin layer 14C₁ as a diffusion inhibiting layer can be improved by increasing a crosslinking density of the resin layer 14C₁. Therefore, it is possible to suppress a decrease in drawing property and a change in color gamut.

An upper limit value of the content of the ultraviolet curable resin in the resin layer 14C₁ is preferably 85 mass% or less, and more preferably 80 mass% or less. When the content of the ultraviolet curable resin in the resin layer 14C₁ is 85 mass% or less, a decrease in content of the polycarbonate resin in the resin layer 14C₁ can be suppressed.

The content of the ultraviolet curable resin in the resin layer 14A₁ is determined as follows. First, a surface of the resin layer 14A₁ is exposed by peeling the pressure-sensitive adhesive layer 14A₂ from the surface of the resin layer 14A₁, or by polishing the recording medium 10 with a microtome or the like. Next, the resin layer 14A₁ is analyzed by a Fourier transform infrared spectrometer (micro FTIR) to determine the content of the ultraviolet curable resin in the resin layer 14A₁.

The contents of the ultraviolet curable resin in the resin layers 14B₁ and 14C₁ are also determined in a procedure similar to the method for measuring the content of the ultraviolet curable resin in the resin layer 14A₁.

### (Polycarbonate resin)

The polycarbonate resin is a resin having a carbonate group (-O-(C=O)-O-) as a structural unit at least in the main chain. Therefore, the polycarbonate resin may have other structural units in the main chain in addition to the carbonate group. The polycarbonate resin preferably has at least one ultraviolet reactive group. When the polycarbonate resin has at least one ultraviolet reactive group, a polymerizable compound contained in the ultraviolet curable resin can be bonded to the polycarbonate resin. Therefore, the crosslinking density of the resin layers 14A₁, 14B₁, and 14C₁ can be increased, so that the function of the resin layers 14A₁, 14B₁, and 14C₁ as a diffusion inhibiting layer can be improved.

The at least one ultraviolet reactive group includes, for example, at least one selected from the group including a radical polymerization reactive group having an ethylenically unsaturated bond, a cationic polymerization reactive group, and the like. The at least one radical polymerization reactive group having an ethylenically unsaturated bond includes, for example, at least one selected from the group including an acryloyl group, a methacryloyl group, an allyl group, a vinyl group, and the like. Among them, at least one selected from the group including an acryloyl group, a methacryloyl group, and a vinyl group is preferable, and at least one selected from the group including an acryloyl group and a methacryloyl group is more preferable. The cationic polymerization reactive group includes, for example, an oxetanyl group or the like.

A lower limit value of the content of the polycarbonate resin in the resin layer 14A₁ is preferably 15 mass% or more, and more preferably 20 mass% or more. When the content of the polycarbonate resin in the resin layer 14A₁ is 15 mass% or more, solubility of the resin layer 14A₁ in a solvent (for example, methyl ethyl ketone) contained in the first recording layer-forming coating material tree is increased, and the first compatible region is easily formed. Therefore, peeling at an interface between the recording layer 13A and the resin layer 14A₁ becomes difficult. Therefore, it becomes difficult to tamper the recording medium 10 by illicitly separating the recording medium 10 at the interface between the recording layer 13A and the resin layer 14A₁. Note that details of the first compatible region will be described later.

An upper limit value of the content of the polycarbonate resin in the resin layer 14A₁ is preferably 33 mass% or less, and more preferably 25 mass% or less. When the content of the polycarbonate resin in the resin layer 14A₁ is 33 mass% or less, a decrease in content of the ultraviolet curable resin in the resin layer 14A₁ can be suppressed.

A lower limit value of the content of the polycarbonate resin in the resin layer 14B₁ is preferably 15 mass% or more, and more preferably 20 mass% or more. When the content of the polycarbonate resin in the resin layer 14B₁ is 15 mass% or more, solubility of the resin layer 14B₁ in a solvent (for example, methyl ethyl ketone) contained in the second recording layer-forming coating material tree is increased, and the second compatible region is easily formed. Therefore, peeling at an interface between the recording layer 13B and the resin layer 14B₁ becomes difficult. Therefore, it becomes difficult to tamper the recording medium 10 by illicitly separating the recording medium 10 at the interface between the recording layer 13B and the resin layer 14B₁. Note that details of the second compatible region will be described later.

An upper limit value of the content of the polycarbonate resin in the resin layer 14B₁ is preferably 33 mass% or less, and more preferably 25 mass% or less. When the content of the polycarbonate resin in the resin layer 14B₁ is 33 mass% or less, a decrease in content of the ultraviolet curable resin in the resin layer 14B₁ can be suppressed.

A lower limit value of the content of the polycarbonate resin in the resin layer 14C₁ is preferably 15 mass% or more, and more preferably 20 mass% or more. When the content of the polycarbonate resin in the resin layer 14C₁ is 15 mass% or more, solubility of the resin layer 14C₁ in a solvent (for example, methyl ethyl ketone) contained in the third recording layer-forming coating material tree is increased, and the third compatible region is easily formed. Therefore, peeling at an interface between the recording layer 13C and the resin layer 14C₁ becomes difficult. Therefore, it becomes difficult to tamper the recording medium 10 by illicitly separating the recording medium 10 at the interface between the recording layer 13C and the resin layer 14C₁. Note that details of the third compatible region will be described later.

An upper limit value of the content of the polycarbonate resin in the resin layer 14C₁ is preferably 33 mass% or less, and more preferably 25 mass% or less. When the content of the polycarbonate resin in the resin layer 14C₁ is 33 mass% or less, a decrease in content of the ultraviolet curable resin in the resin layer 14C₁ can be suppressed.

The contents of the polycarbonate resin in the resin layers 14A₁, 14B₁, and 14C₁ are determined in a procedure similar to the method for measuring the content of the ultraviolet curable resin in the resin layers 14A₁, 14B₁, and 14C₁.

### (UV cut layer 15)

The UV cut layer 15 is a filter layer having spectral characteristics of transmitting visible light and shielding ultraviolet rays. The UV cut layer 15 contains, for example, at least one ultraviolet absorber. The at least one ultraviolet absorber includes, for example, at least one selected from the group including a triazine ultraviolet absorber, a benzotriazole ultraviolet absorber, a benzophenone ultraviolet absorber, an oxybenzophenone ultraviolet absorber, a salicylic ester ultraviolet absorber, a cyanoacrylate ultraviolet absorber, and the like.

### (Cover layer 16)

The cover layer 16 covers an upper surface of the recording medium 10 (a surface on a side opposite to the base material 11). The cover layer 16 is preferably transmissive with respect to laser light used for drawing on the recording medium 10 and visible light. The cover layer 16 is, for example, a film. As a material of the film, a material similar to the polymer material of the base material 11 can be exemplified.

### (Compatible region)

The recording medium 10 preferably has at least one of the first compatible region, the second compatible region, or the third compatible region, and particularly preferably has all of these regions. The first compatible region is a region between the recording layer 13A and the resin layer 14A₁, and is a region in which materials contained in the recording layer 13A and the resin layer 14A₁ are mixed. The second compatible region is a region between the recording layer 13B and the resin layer 14B₁, and is a region in which materials contained in the recording layer 13B and the resin layer 14B₁ are mixed. The third compatible region is a region between the recording layer 13C and the resin layer 14C₁, and a region in which materials contained in the recording layer 13C and the resin layer 14C₁ are mixed.

From the viewpoint of improving the peel strength between the recording layer 13A and the resin layer 14A₁, it is preferable that the content of the polycarbonate resin in the first compatible region continuously changes in a thickness direction of the recording medium 10. In the first compatible region, the content of the polycarbonate resin may increase from the recording layer 13A toward the resin layer 14A₁, or may increase from the resin layer 14A₁ toward the recording layer 13A.

From the viewpoint of improving the peel strength between the recording layer 13B and the resin layer 14B₁, it is preferable that the content of the polycarbonate resin in the second compatible region continuously changes in the thickness direction of the recording medium 10. In the second compatible region, the content of the polycarbonate resin may increase from the recording layer 13B toward the resin layer 14B₁, or may increase from the resin layer 14B₁ toward the recording layer 13B.

From the viewpoint of improving the peel strength between the recording layer 13C and the resin layer 14C₁, it is preferable that the content of the polycarbonate resin in the third compatible region continuously changes in the thickness direction of the recording medium 10. In the third compatible region, the content of the polycarbonate resin may increase from the recording layer 13C toward the resin layer 14C₁, or may increase from the resin layer 14C₁ toward the recording layer 13C.

From the viewpoint of improving the peel strength between the recording layer 13A and the resin layer 14A₁, it is preferable that the content of the ultraviolet curable resin in the first compatible region continuously changes in the thickness direction of the recording medium 10. The content of the ultraviolet curable resin in the first compatible region may increase from the recording layer 13A toward the resin layer 14A₁.

From the viewpoint of improving the peel strength between the recording layer 13B and the resin layer 14B₁, it is preferable that the content of the ultraviolet curable resin in the second compatible region continuously changes in the thickness direction of the recording medium 10. The content of the ultraviolet curable resin in the second compatible region may increase from the recording layer 13B toward the resin layer 14B₁.

From the viewpoint of improving the peel strength between the recording layer 13C and the resin layer 14C₁, it is preferable that the content of the ultraviolet curable resin in the third compatible region continuously changes in the thickness direction of the recording medium 10. The content of the ultraviolet curable resin in the third compatible region may increase from the recording layer 13C toward the resin layer 14C₁.

From the viewpoint of improving the peel strength between the recording layer 13A and the resin layer 14A₁, it is preferable that a content of a polymerizable compound in the first compatible region continuously changes in the thickness direction of the recording medium 10. The content of the polymerizable compound in the first compatible region may increase from the recording layer 13A toward the resin layer 14A₁.

From the viewpoint of improving the peel strength between the recording layer 13B and the resin layer 14B₁, it is preferable that a content of a polymerizable compound in the second compatible region continuously changes in the thickness direction of the recording medium 10. The content of the polymerizable compound in the second compatible region may increase from the recording layer 13B toward the resin layer 14B₁.

From the viewpoint of improving the peel strength between the recording layer 13C and the resin layer 14C₁, it is preferable that a content of a polymerizable compound in the third compatible region continuously changes in the thickness direction of the recording medium 10. The content of the polymerizable compound in the third compatible region may increase from the recording layer 13C toward the resin layer 14C₁.

### (Average peel strength)

An average peel strength at the interface between the recording layer 13A and the resin layer 14A₁ is preferably 3.5 N/cm or more, more preferably 4.0 N/cm or more, and still more preferably 5.0 N/cm or more. When the average peel strength at the interface between the recording layer 13A and the resin layer 14A₁ is 3.5 N/cm or more, peeling at the interface between the recording layer 13A and the resin layer 14A₁ becomes difficult. Accordingly, it becomes difficult to tamper the recording medium 10 by illicitly separating the recording medium 10 at the interface between the recording layer 13A and the resin layer 14A₁.

An average peel strength at the interface between the recording layer 13B and the resin layer 14B₁ is preferably 3.5 N/cm or more, more preferably 4.0 N/cm or more, and still more preferably 5.0 N/cm or more. When the average peel strength at the interface between the recording layer 13B and the resin layer 14B₁ is 3.5 N/cm or more, peeling at the interface between the recording layer 13B and the resin layer 14B₁ becomes difficult. Accordingly, it becomes difficult to tamper the recording medium 10 by illicitly separating the recording medium 10 at the interface between the recording layer 13B and the resin layer 14B₁.

An average peel strength at the interface between the recording layer 13C and the resin layer 14C₁ is preferably 3.5 N/cm or more, more preferably 4.0 N/cm or more, and still more preferably 5.0 N/cm or more. When the average peel strength at the interface between the recording layer 13C and the resin layer 14C₁ is 3.5 N/cm or more, peeling at the interface between the recording layer 13C and the resin layer 14C₁ becomes difficult. Accordingly, it becomes difficult to tamper the recording medium 10 by illicitly separating the recording medium 10 at the interface between the recording layer 13B and the resin layer 14B₁.

From the viewpoint of more reliability preventing tampering of the recording medium 10, the average peel strengths at all interfaces between the recording layer 13A and the resin layer 14A₁, between the recording layer 13B and the resin layer 14B₁, and between the recording layer 13C and the resin layer 14C₁ are preferably 3.5 N/cm or more, more preferably 4.0 N/cm or more, and still more preferably 5.0 N/cm or more. In this case, the peel strengths at individual interfaces between the recording layer 13A and the resin layer 14A₁, between the recording layer 13B and the resin layer 14B₁, and between the recording layer 13C and the resin layer 14C₁ may be different or the same.

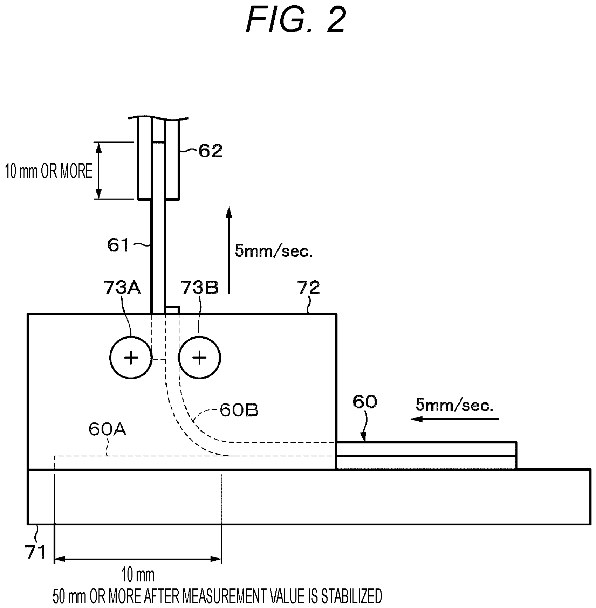

The average peel strength of the interface between the recording layer 13A and the resin layer 14A₁ is determined by performing a 90 degree peel test. Hereinafter, the 90 degree peel test will be described with reference to Fig. 2.

First, the recording medium 10 is cut into a band shape having a width of 10 mm and a length of 100 mm to prepare a test piece 60, and the test piece 60 is left for 24 hours or more in an atmosphere in a standard state at a temperature of 23 ± 1°C and a relative humidity of 50 ± 5%. Hereinafter, in the test piece 60, a laminate below the interface between the recording layer 13A and the resin layer 14A₁ is referred to as an adherend 60A, and a laminate above the interface is referred to as an adherend 60B. Next, at one end portion of the test piece 60 in a longitudinal direction, a notch is made between the adherend 60A and the adherend 60B with a sharp blade such as a cutter, the adherend 60B is peeled off by a length of 20 mm in the longitudinal direction to prepare a grip margin, and then a surface of the test piece 60 on the adherend 60A side is fixed to a test stand 71 with a strong pressure-sensitive adhesive. As the pressure-sensitive adhesive, a pressure-sensitive adhesive having sufficiently high pressure-sensitive adhesive force, for example, a strong pressure-sensitive adhesive tape scotch (registered trademark) manufactured by 3M Company is selected so that the test piece 60 is not peeled off from the test stand 71 when the peel strength between the recording layer 13A and the resin layer 14A₁ is measured.

Next, one end of a tension member 61 is bonded to a surface of the adherend 60B on the resin layer 14A₁ side. As the tension member 61, a band-shaped film having sufficient strength is used which does not cause elongation or breakage during the measurement of the peel strength. Furthermore, one end portion of the tension member 61 is bonded to the adherend 60B with a sufficiently high pressure-sensitive adhesive force so that the tension member 61 is not peeled off from the adherend 60A at the time of measuring the peel strength. Fig. 2 illustrates an example in which the tension member 61 serves as the grip margin, but in a case where a clamp device (metal plates) 62 has a sufficient stroke to sandwich the adherend 60B, the adherend 60B may be directly clamped without the tension member 61.

Next, the grip margin of the tension member 61 is interposed between a set of movable rolls 73A and 73B of a jig 72, and then the grip margin is sandwiched and fixed by 10 mm or more by the clamp device (metal plates) 62 of a tensile compression tester SV-55C 2H manufactured by IMADA-SS Corporation. The movable rolls 73A and 73B serve as fulcrums of peeling in the 90 degree peel test. Next, the 90 degree peel test is performed using the tensile compression tester while the test force [N/cm] and the stroke [mm] are monitored in terms of voltage values by, for example, a data logger manufactured by Keyence Corporation, and the voltage values are converted into forces and stored in a memory as CSV output data. Note that the 90 degree peel test described above is performed at a tensile speed of 5 mm/sec in a standard state of a temperature of 23 ± 1°C and a relative humidity of 50 ± 5%. The stroke is set to 50 mm or more.

The 90 degree peel test described above is performed three times in total, in which a point where the peel strength is stabilized (a location where the development of force becomes gentle) is taken as a start point (0 mm), and pieces of CSV output data up to a point at a relative distance of 50 mm from the start point are arithmetically averaged to calculate an average value. As a result, the average peel strength between the recording layer 13A and the resin layer 14A₁ is obtained. However, in a case where there is a point (spike) where the peeling force suddenly decreases in the CSV output data, the point (spike) is excluded from the CSV output data, and the average peel strength is calculated.

The peel strength at the interface between the recording layer 13B and the resin layer 14B₁ and the peel strength at the interface between the recording layer 13C and the resin layer 14C₁ are obtained in a procedure similar to that for the peel strength at the interface between the recording layer 13A and the resin layer 14A₁.

### (Average value of minimum peel strength)

Among the peel strengths between the individual layers constituting the recording medium 10, an average value of a minimum peel strength is preferably 3.5 N/cm or more, more preferably 4.0 N/cm or more, and still more preferably 5.0 N/cm or more. When the average value of the minimum peel strength is 3.5 N/cm or more as described above, peeling at the interfaces between the individual layers constituting the recording medium 10 becomes difficult. Therefore, it becomes difficult to tamper the recording medium 10 by illicitly separating the recording medium 10 at the interfaces between the individual layers constituting the recording medium 10.

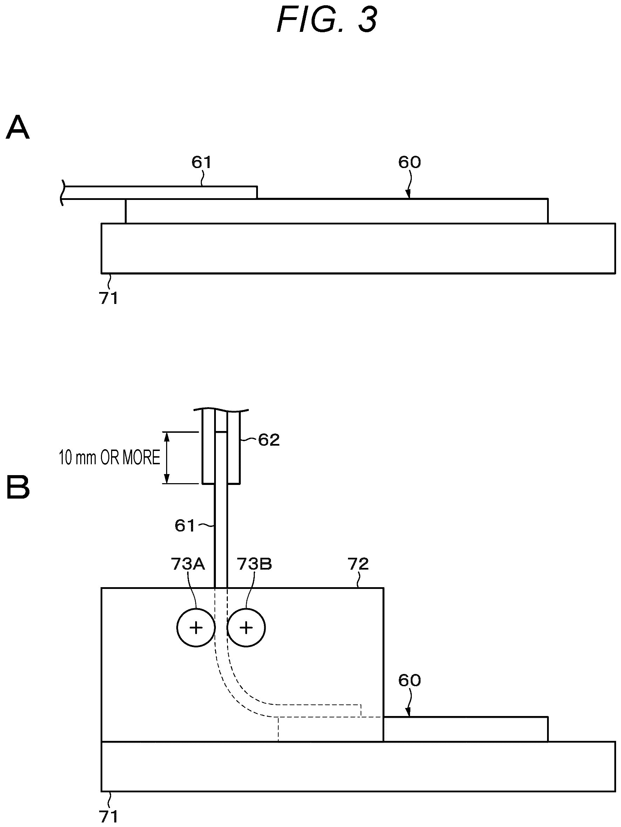

The average value of the minimum peel strengths among the peel strengths between the individual layers constituting the recording medium 10 is obtained by performing a 90 degree peel test. Hereinafter, the 90 degree peel test will be described with reference to Figs. 3A and 3B.

First, the recording medium 10 is cut into a band shape having a width of 10 mm and a length of 100 mm to prepare a test piece 60, and the test piece 60 is left for 24 hours or more in an atmosphere in a standard state at a temperature of 23 ± 1°C and a relative humidity of 50 ± 5%. Next, as illustrated in Fig. 3A, the surface of the test piece 60 on the side of the base material 11 is fixed to the test stand 71 with a strong pressure-sensitive adhesive, and the tension member 61 is bonded to the surface of the test piece 60 on the side of the cover layer 16. As the tension member 61, a band-shaped film having sufficient strength is used which does not cause elongation or breakage during the measurement of the average peel strength. Furthermore, one end portion of the tension member 61 is bonded to a surface of the test piece 60 on the cover layer 16 side with sufficiently high pressure-sensitive adhesive force so as not to be peeled off from the test piece 60 at the time of measuring the average peel strength.

Next, as illustrated in Fig. 3B, the grip margin of the tension member 61 is interposed between the set of movable rolls 73A and 73B of the jig 72, and then the grip margin is sandwiched and fixed by 10 mm or more by the clamp device (metal plates) 63 of the tensile compression tester SV-55C 2H manufactured by IMADA-SS Corporation. The subsequent steps are similar to the method for measuring the average peel strength between the adherend 60A and the adherend 60B. The average value of the minimum peel strengths among the peel strengths between the individual layers constituting the recording medium 10 is obtained as described above.

### [Method of manufacturing recording medium]

Hereinafter, an example of a method of manufacturing the recording medium 10 according to the first embodiment will be described.

### (Step of forming first laminated film)

First, the first matrix resin is dissolved in a solvent. The solvent preferably contains a solvent capable of dissolving a surface of the resin layer 14A₁. For example, the solvent preferably contains methyl ethyl ketone (MEK). Next, the first coloring compound in a non-colored state, the first developer, and the first photothermal conversion agent are added to and dispersed in this solution. As a result, the first recording layer-forming coating material is prepared. Next, a resin layer-forming coating material is prepared by mixing a polycarbonate resin and an ultraviolet curable resin. At this time, the solvent may be further mixed as necessary. The solvent may contain at least one selected from the group including methyl ethyl ketone, ethyl acetate, toluene, and the like.

Subsequently, after the resin layer-forming coating material is applied onto a flat surface, the solvent of the resin layer-forming coating material is dried as necessary, and the resin layer-forming coating material is irradiated with ultraviolet rays and cured to form the resin layer 14A₁. Note that, the resin layer 14A₁ may be formed by applying an ultraviolet curable resin onto the film, and then irradiating the resin layer-forming coating material with ultraviolet rays to cure the resin layer-forming coating material. In this case, the film may be taken into the recording medium 10 or may be removed during the manufacturing step of the recording medium 10.

Next, the first recording layer-forming coating material is applied onto the resin layer 14A₁, and dried and cured to form the recording layer 13A. At this time, the surface of the resin layer 14A₁ is preferably dissolved with a solvent such as methyl ethyl ketone contained in the first recording layer-forming coating material. By dissolving the surface of the resin layer 14A₁ in this manner, the first compatible region is formed between the recording layer 13A and the resin layer 14A₁. In this way, a first laminated film including a resin layer 12A₁ and the recording layer 13A is obtained.

### (Step of forming second laminated film)

The second recording layer-forming coating material is prepared using the second matrix resin, the second coloring compound, the second developer, and the second photothermal conversion agent in place of the first matrix resin, the first coloring compound, the first developer, and the first photothermal conversion agent. Except for this, a second laminated film including the resin layer 14B₁ and the recording layer 13B is obtained similarly to the step of forming the first laminated film. Also in the step of forming the second laminated film, it is preferable that the surface of the resin layer 14B₁ is dissolved by a solvent such as methyl ethyl ketone contained in the second recording layer-forming coating material, and the second compatible region is formed between the recording layer 13B and the resin layer 14B₁.

### (Step of forming third laminated film)

The third recording layer-forming coating material is prepared using the third matrix resin, the third coloring compound, the third developer, and the third photothermal conversion agent in place of the first matrix resin, the first coloring compound, the first developer, and the first photothermal conversion agent. Except for this, a third laminated film including the resin layer 14C₁ and the recording layer 13C is obtained similarly to the step of forming the first laminated film. Also in the step of forming the third laminated film, it is preferable that the surface of the resin layer 14C₁ is dissolved by a solvent such as methyl ethyl ketone contained in the third recording layer-forming coating material, and the third compatible region is formed between the recording layer 13C and the resin layer 14C₁.

### (Lamination Step)

First, a fourth laminated film sequentially provided with the cover layer 16, the pressure-sensitive adhesive layer 12B, the UV cut layer 15, the resin layer 14C₃, and the pressure-sensitive adhesive layer 14C₂ is prepared. Next, after the pressure-sensitive adhesive layer 12A is formed on the base material 11, the first laminated film is bonded onto the pressure-sensitive adhesive layer 12A so that the recording layer 13A and the pressure-sensitive adhesive layer 12A are in contact with each other.

Next, after the pressure-sensitive adhesive layer 14A₂ is formed on the resin layer 14A₁, the second laminated film is bonded onto the pressure-sensitive adhesive layer 14A₂ so that the recording layer 13B and the pressure-sensitive adhesive layer 14A₂ are in contact with each other.

Next, after the pressure-sensitive adhesive layer 14B₂ is formed on the resin layer 14B₁, the third laminated film is bonded onto the pressure-sensitive adhesive layer 14B₂ so that the recording layer 13C and the pressure-sensitive adhesive layer 14B₂ are in contact with each other.

Next, the fourth laminated film is bonded onto the resin layer 14C₁ so that the resin layer 14C₁ and the pressure-sensitive adhesive layer 14C₂ are in contact with each other. In this way, the recording medium 10 illustrated in Fig. 1 is obtained.

### [Recording method of recording medium]

Hereinafter, an example of a recording method of the recording medium 10 according to the first embodiment will be described.

The recording layer 13A develops a magenta color as follows. When a predetermined position of the recording layer 13A is irradiated with near-infrared laser light having a first peak wavelength λ₁, the first photothermal conversion agent included in the portion irradiated with the laser light absorbs the near-infrared laser light and generates heat. Due to this heat generation, the first developer melts, a color reaction (color development reaction) occurs between the first developer and the first coloring compound, and the portion irradiated with the laser light develops a magenta color.

The recording layer 13B develops a cyan color as follows. When a predetermined position of the recording layer 13B is irradiated with near-infrared laser light having a second peak wavelength λ₂, the portion irradiated with the laser light develops a cyan color by a reaction similar to that of the above-described recording layer 13A.

The recording layer 13C develops a yellow color as follows. When a predetermined position of the recording layer 13B is irradiated with near-infrared laser light having a third peak wavelength λ₃, the portion irradiated with the laser light develops a yellow color by a reaction similar to that of the above-described recording layer 13A.

As described above, the predetermined positions of the recording layers 13A, 13B, and 13C develop magenta color, cyan color, and yellow colors, respectively, whereby a desired full-color image is drawn on the recording medium 10.

### [Operations and Effects]

In the recording medium 10 according to the first embodiment, the resin layers 14A₁, 14B₁, and 14C₁ contain an ultraviolet curable resin and a polycarbonate resin. Therefore, in the manufacturing step of the recording medium 10, when the first, second, and third recording layer-forming coating materials are applied onto the resin layer 14A₁, the resin layer 14B₁, and the resin layer 14C₁, respectively, the surfaces of the resin layer 14A₁, the resin layer 14B₁, and the resin layer 14C₁ are easily dissolved. As a result, in the manufacturing step of the recording medium 10, the first compatible region, the second compatible region, and the third compatible region can be formed between the recording layer 13A and the resin layer 14A₁, between the recording layer 13B and the resin layer 14B₁, and between the recording layer 13C and the resin layer 14C₁, respectively. Therefore, the peel strength at the interface between the recording layer 13A and the resin layer 14A₁, the interface between the recording layer 13B and the resin layer 14B₁, and the interface between the recording layer 13C and the resin layer 14C₁ can be increased as compared with the case where the resin layers 14A₁, 14B₁, and 14C₁ contain only an ultraviolet curable resin. Accordingly, it is possible to make it difficult to illicitly separate the recording medium 10 on each of the interfaces described above. That is, it is possible to make it difficult to tamper the recording medium 10.

Furthermore, the resin layers 14A₁, 14B₁, and 14C₁ contain an ultraviolet curable resin. As a result, the functions of the resin layers 14A₁, 14B₁, and 14C₁ as diffusion inhibiting layers can be improved.

### [Modifications]

### (Modification 1)

In the first embodiment, an example has been described in which all of the resin layer 14A₁, the resin layer 14B₁, and the resin layer 14C₁ contain an ultraviolet curable resin and a polycarbonate resin, but the present disclosure is not limited to this example. For example, one or two of the resin layer 14A₁, the resin layer 14B₁, and the resin layer 14C₁ may contain an ultraviolet curable resin and a polycarbonate resin, and the remaining layers may contain an ultraviolet curable resin.

### (Modification 2)

In the first embodiment, an example has been described in which the intermediate layer 14A includes the resin layer 14A₁ and the pressure-sensitive adhesive layer 14A₂, but the intermediate layer 14A may include only the resin layer 14A₁. Similarly, the intermediate layer 14B may include only the resin layer 14A₁, or the intermediate layer 14C may include only the resin layer 14C₁. The cover layer 16 and the pressure-sensitive adhesive layer 12B may be omitted, or the base material 11 and the pressure-sensitive adhesive layer 12A may be omitted.

### (Modification 3)

In the first embodiment, an example has been described in which the recording medium 10 includes the three recording layers 13A, 13B, and 13C. However, the recording medium 10 may include one recording layer or may include a plurality of recording layers other than three (that is, two recording layers or four or more recording layers). Also in this case, an intermediate layer may be provided between the laminated recording layers. The plurality of recording layers may be capable of individually exhibiting hues different from each other in the color-developed state. That is, the coloring compounds contained individually in the plurality of recording layers may be capable of exhibiting hues different from each other in the color-developed state. The photothermal conversion agents contained individually in the plurality of recording layers may have absorption wavelength peaks different from each other.

### (Modification 4)

In the first embodiment, an example has been described in which the recording layers 13A, 13B, and 13C contain a polycarbonate resin, and the resin layers 14A₁, 14B₁, and 14C₁ contain a polycarbonate resin and an ultraviolet curable resin, but the present disclosure is not limited to this example. For example, the recording layers 13A, 13B, and 13C may contain a first thermoplastic resin instead of a polycarbonate resin, and the resin layers 14A₁, 14B₁, and 14C₁ may contain a second thermoplastic resin of the same type as the first thermoplastic resin. Alternatively, the recording layers 13A, 13B, and 13C may contain the first thermoplastic resin together with a polycarbonate resin, and the resin layers 14A₁, 14B₁, and 14C₁ may contain the second thermoplastic resin of the same type as the first thermoplastic resin. The first and second thermoplastic resins preferably have at least one ultraviolet reactive group. Specific examples of the at least one ultraviolet reactive group include an ultraviolet reactive group similar to the at least one ultraviolet reactive group of the polycarbonate resin contained in the resin layers 14A₁, 14B₁, and 14C₁. The first and second thermoplastic resins include, for example, at least one selected from the group including a polystyrene resin, a polyvinyl acetate resin, a polyvinyl chloride resin, a vinyl chloride-vinyl acetate copolymer resin, and the like.

### <2 Second embodiment>

### [Configuration of recording medium]

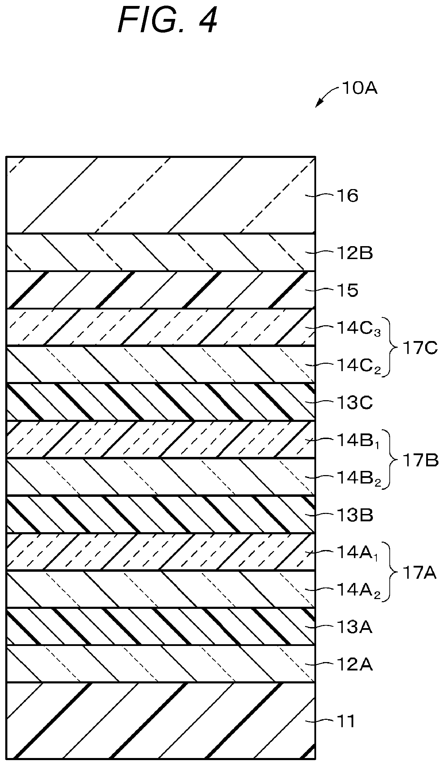

Fig. 4 is a cross-sectional view illustrating an example of a configuration of a recording medium 10A according to a second embodiment. The recording medium 10A is different from the recording medium 10 according to the first embodiment in including intermediate layers 17A, 17B, and 17C instead of the intermediate layers 14A, 14B, and 14C.

### (Intermediate layer 17A, 17B, 17C)

The intermediate layer 17A is different from the intermediate layer 14A in the first embodiment in that a pressure-sensitive adhesive layer 14A₂ and a resin layer 14A₁ are sequentially provided on a recording layer 13A. In the second embodiment, the pressure-sensitive adhesive layer 14A₂ bonds the recording layer 13A and the resin layer 14A₁.

The intermediate layer 17B is different from the intermediate layer 14B in the first embodiment in that a pressure-sensitive adhesive layer 14B₂ and a resin layer 14B₁ are sequentially provided on a recording layer 13B. In the second embodiment, the pressure-sensitive adhesive layer 14B₂ bonds the recording layer 13B and the resin layer 14B₁.

The intermediate layer 17C is different from the intermediate layer 14C in the first embodiment in that a pressure-sensitive adhesive layer 14C₂ and a resin layer 14C₃ are sequentially provided on a recording layer 13C. In the second embodiment, the pressure-sensitive adhesive layer 14C₂ bonds the recording layer 13C and the resin layer 14C₃.

### (Compatible region)

The recording medium 10A preferably has at least one of a first compatible region or a second compatible region, and particularly preferably has both of these regions. The first compatible region is a region between the resin layer 14A₁ and the recording layer 13B, and is a region in which materials contained in the resin layer 14A₁ and the recording layer 13B are mixed. The second compatible region is a region between the resin layer 14B₁ and the recording layer 13C, and is a region in which materials contained in the resin layer 14B₁ and the recording layer 13C are mixed.

### [Method of manufacturing recording medium]

Hereinafter, an example of a method of manufacturing the recording medium 10A according to the second embodiment will be described.

### (Step of forming recording layer 13A)

The first recording layer-forming coating material has been prepared similarly to the step of forming the first laminated film in the first embodiment. Next, the first recording layer-forming coating material is applied onto a flat surface by a gravure coating method, and dried and cured to obtain the recording layer 13A. Note that the recording layer 13A may be formed by applying the first recording layer-forming coating material onto a film and drying and curing the first recording layer-forming coating material. In this case, the film may be taken into the recording medium 10A or may be removed during the manufacturing step of the recording medium 10A.

### (Step of forming second laminated film)

A second laminated film including the resin layer 14A₁ and the recording layer 13B is obtained similarly to the step of forming the second laminated film in the

### first embodiment.

### (Step of forming third laminated film)

A third laminated film including the resin layer 14B₁ and the recording layer 13C is obtained similarly to the step of forming the third laminated film in the first embodiment.

### (Lamination Step)

First, a fourth laminated film sequentially provided with a cover layer 16, a pressure-sensitive adhesive layer 12B, a UV cut layer 15, and the resin layer 14C₃ is prepared. Next, after the pressure-sensitive adhesive layer 14C₂ is formed on the resin layer 14C₃ of the fourth laminated film, the third laminated film is bonded onto the pressure-sensitive adhesive layer 14C₂ such that the pressure-sensitive adhesive layer 14C₂ and the recording layer 13C are in contact with each other.

Next, after the pressure-sensitive adhesive layer 14B₂ is formed on the resin layer 14B₁, the second laminated film is bonded onto the pressure-sensitive adhesive layer 14B₂ such that the pressure-sensitive adhesive layer 14B₂ and the recording layer 13B are in contact with each other.

Next, after the pressure-sensitive adhesive layer 14A₂ is formed on the resin layer 14A₁, the recording layer 13A is bonded onto the pressure-sensitive adhesive layer 14A₂ such that the pressure-sensitive adhesive layer 14A₂ and the recording layer 13A are in contact with each other.

Next, a pressure-sensitive adhesive layer 12A is formed on the recording layer 13A, and then a base material 11 is bonded onto the pressure-sensitive adhesive layer 12A. In this way, the recording medium 10A illustrated in Fig. 4 is obtained.

### [Operations and Effects]

In the recording medium 10A according to the second embodiment, the resin layers 14A₁ and 14B₁ contain an ultraviolet curable resin and a polycarbonate resin. Therefore, in the manufacturing step of the recording medium 10A, when the second and third recording layer-forming coating resins are applied onto the resin layer 14A₁ and the resin layer 14B₁, respectively, surfaces of the resin layer 14A₁ and the resin layer 14B₁ are easily dissolved. As a result, in the manufacturing step of the recording medium 10A, a second compatible region and a third compatible region can be formed between the constituent materials of the resin layer 14A₁ and the recording layer 13B and between the resin layer 14B₁ and the recording layer 13C, respectively. Therefore, a peel strength at an interface between the resin layer 14A₁ and the recording layer 13B and an interface between the resin layer 14B₁ and the recording layer 13C can be increased as compared with a case where the resin layers 14A₁ and 14B₁ contain only an ultraviolet curable resin. Accordingly, it is possible to make it difficult to illicitly separate the recording medium 10A on each of the interfaces described above. That is, it is possible to make it difficult to tamper the recording medium 10A.

Furthermore, the resin layers 14A₁ and 14B₁ contain an ultraviolet curable resin. As a result, the functions of the resin layers 14A₁ and 14B₁ as diffusion inhibiting layers can be improved.

### [Modifications]

### (Modification 1)

In the first embodiment, an example has been described in which both the resin layer 14A₁ and the resin layer 14B₁ contain an ultraviolet curable resin and a polycarbonate resin, but the present disclosure is not limited to this example. For example, one of the resin layer 14A₁ and the resin layer 14B₁ may contain an ultraviolet curable resin and a polycarbonate resin, and another one may contain an ultraviolet curable resin.

### (Modification 2)

A configuration similar to that of Modification 2 in the first embodiment may be applied to the recording medium 10A according to the second embodiment.

### (Modification 3)

A configuration similar to that of Modification 3 in the first embodiment may be applied to the recording medium 10A according to the second embodiment.

### (Modification 4)

A configuration similar to that of Modification 4 in the first embodiment may be applied to the recording medium 10A according to the second embodiment.

### (Modification 5)

A resin layer may be provided between the pressure-sensitive adhesive layer 12A and the recording layer 13A. Similarly to the resin layer 14A₁ and the resin layer 14B₁, the resin layer desirably contains an ultraviolet curable resin and a polycarbonate resin. Examples of the ultraviolet curable resin and the polycarbonate resin include materials similar to those of the resin layer 14A₁ and the resin layer 14B₁.

### <3 Application examples>

The recording medium 10 according to the first embodiment and the modifications thereof and the recording medium 10A according to the second embodiment and the modifications thereof may be applied to a card, a medical article, an automobile component, an automobile, a toy, food, cosmetics, clothing, a document (for example, a passport), an exterior member, or a housing of an electronic device or the like. Specific examples of the exterior member include, for example, the interior or exterior of a wall or the like of a building, the exterior of furniture such as a desk, and the like. Specific examples of the electronic device include personal computers (hereinafter, referred to as "PC"), mobile devices, mobile phones (for example, smartphones), tablet computers, display devices, imaging devices, audio devices, game devices, industrial devices, medical devices, robots, wearable terminals, and the like. Specific examples of the wearable terminal include clothing items such as watches (wristwatches), bags, clothes, hats, glasses, and shoes.

Hereinafter, specific examples in which the recording medium 10 or 10A is applied to a card, a booklet, a smartphone, a notebook personal computer, and a cosmetic container will be described.

### <3-1 Application example 1>

In Application example 1, an example of a card provided with the recording medium 10 according to the first embodiment will be described.

### [Configuration of card]

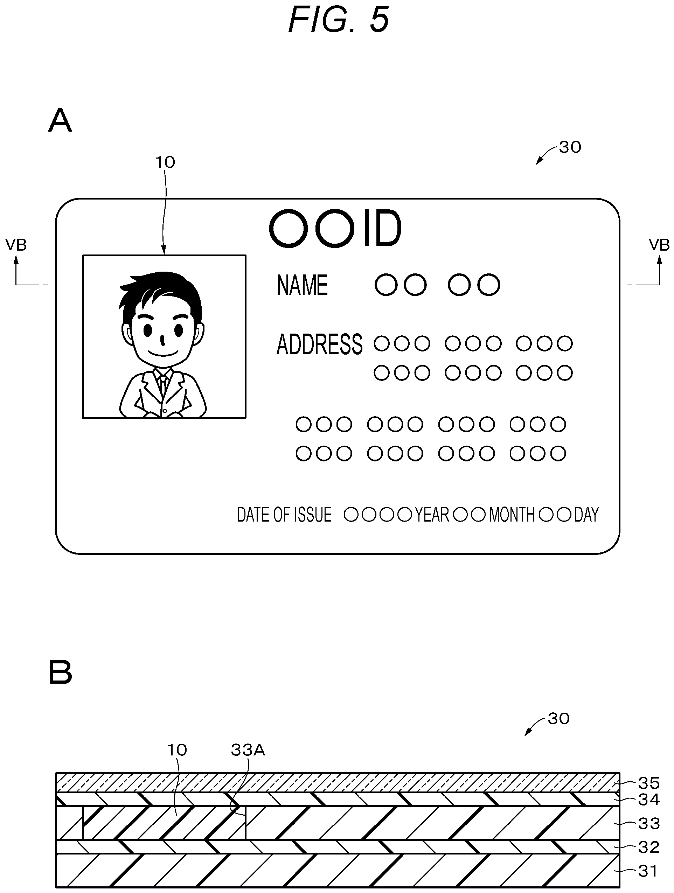

Hereinafter, an example of a configuration of a card 30 according to Application example 1 will be described with reference to Figs. 5A and 5B. The card 30 sequentially includes a base material (card base material) 31, an adhesive layer 32, an intermediate layer 33, an adhesive layer 34, and an overlay layer 35. The intermediate layer 33 includes the recording medium 10.

The card 30 is an example of a laminate. The card 30 is an ID card (for example, an employee ID card, a membership card, a student ID card, and the like). The ID card is an example of card-type identification. In Application example 1, an example in which the card 30 is an ID card will be described, but the type of card provided with the recording medium 10 is not limited thereto. The card provided with the recording medium 10 may be, for example, a card such as a security card, a financial payment card (for example, a credit card, a cash card, or the like), a driver's license, a health insurance card, a basic resident registration card, a personal number card (an individual number card), or a personal transaction card (for example, a prepaid card, a points card, or the like). The card 30 may be a contactless IC card.

### (Base material 31)

The base material 31 may be a support that supports the intermediate layer 33. The base material 31 has a rectangular thin plate shape, for example. The base material 31 has a first surface (front surface) on which the adhesive layer 32, the intermediate layer 33, the adhesive layer 34, and the overlay layer 35 are laminated, and a second surface (back surface) opposite to the first surface. The base material 31 may have a color such as white. A pattern, a picture, a photograph, a character, a combination of two or more thereof, or the like (hereinafter, referred to as a "pattern or the like") may be printed on the first surface of the base material 31. The base material 31 may include an integrated circuit (IC) chip, an antenna coil, and the like on the first surface.

The base material 31 contains, for example, plastic. The base material 31 may contain at least one selected from the group including a colorant, an antistatic agent, a flame retardant, a surface modifier, and the like, as necessary.

The plastic includes, for example, at least one selected from the group including an ester resin, an amide resin, an olefin resin, a vinyl resin, an acrylic resin, an imide resin, a styrenic resin, an engineering plastic, and the like. In a case where the base material 31 contains two or more resins, the two or more resins may be mixed, copolymerized, or laminated.

The ester resin includes, for example, at least one selected from the group including a polyethylene terephthalate (PET) resin, a polybutylene terephthalate (PBT) resin, a polyethylene naphthalate (PEN) resin, a polyethylene terephthalate-isophthalate copolymer resin, a terephthalic acid-cyclohexanedimethanol-ethylene glycol copolymer resin, and the like. The amide resin includes, for example, at least one selected from the group including a nylon 6 resin, a nylon 66 resin, a nylon 610 resin, and the like. The olefin resin includes, for example, at least one selected from the group including a polyethylene (PE) resin, a polypropylene (PP) resin, a polymethylpentene (PMP) resin, and the like. The vinyl resin includes, for example, a polyvinyl chloride (PVC) resin.

The acrylic resin includes, for example, at least one selected from the group including a polyacrylate resin, a polymethacrylate resin, a polymethyl methacrylate (PMMA) resin, and the like. The imide resin includes, for example, at least one selected from the group including a polyimide (PI) resin, a polyamideimide (PAI) resin, a polyetherimide (PEI) resin, and the like. The styrenic resin includes, for example, at least one selected from the group including a polystyrene (PS) resin, a high-impact polystyrene resin, an acrylonitrile-styrene resin (AS resin), an acrylonitrile-butadienestyrene resin (ABS resin), and the like. The engineering plastic includes, for example, at least one selected from the group including a polycarbonate (PC) resin, a polyarylate (PAR) resin, a polysulfone (PSF) resin, a polyethersulfone (PES) resin, a polyphenylene ether (PPE) resin, a polyphenylene sulfide (PPS) resin, a polyether ketone (PEK) resin, a polyether-ether ketone (PEEK) resin, a polyphenylene oxide (PPO) resin, a polyether sulfite resin, and the like.

### (Intermediate layer 33)

The intermediate layer 33 is provided between the base material 31 and the overlay layer 35. More specifically, the intermediate layer 33 is provided on the first surface of the base material 31, and the adhesive layer 32 is sandwiched between the base material 31 and the intermediate layer 33. The intermediate layer 33 includes an accommodation part 33A for accommodating the recording medium 10. The accommodation part 33A is provided in a part of the plane of the intermediate layer 33. The accommodation part 33A may be a through hole penetrating in the thickness direction of the intermediate layer 33. The intermediate layer 33 is for controlling the difference in level formed by the recording medium 10 when the recording medium 10 is sandwiched between the base material 31 and the overlay layer 35. The intermediate layer 33 has substantially the same thickness as the recording medium 10, and covers the first surface of the base material 31 other than the region where the recording medium 10 is provided.

The intermediate layer 33 has a film shape. The intermediate layer 33 may be transmissive with respect to visible light. The intermediate layer 33 contains plastic. As the plastic, a material similar to that of the base material 31 can be exemplified.

### (Overlay layer 35)

The overlay layer 35 is provided on the intermediate layer 33 and the recording medium 10, and covers the intermediate layer 33 and the recording medium 10. The adhesive layer 34 is sandwiched between the intermediate layer 33 and the recording medium 10 and the overlay layer 35. The overlay layer 35 protects the internal members of the card 30 (that is, the recording medium 10 and the intermediate layer 33) and maintains the mechanical reliability of the card 30.

The overlay layer 35 has a film shape. The overlay layer 35 is transmissive with respect to visible light. The overlay layer 35 contains plastic. As the plastic, a material similar to that of the base material 31 can be exemplified. A pattern or the like may be printed on at least one surface of the overlay layer 35.

### (Adhesive layer 32, 34)

The adhesive layer 32 is provided between the base material 31 and the intermediate layer 33, and causes the base material 31 and the intermediate layer 33 to adhere to one another. The adhesive layer 34 is provided between the intermediate layer 33 and the overlay layer 35, and causes the intermediate layer 33 and the overlay layer 35 to adhere to one another. The adhesive layers 32 and 34 have transparency. The adhesive layers 32 and 34 preferably contain a thermosetting adhesive. The thermosetting adhesive contains, for example, a thermosetting resin. The thermosetting resin includes, for example, at least one selected from the group including an epoxy resin, a urethane resin, and the like. A curing temperature of the thermal adhesive is preferably in a temperature range of 100°C or more and 120°C or less, from the viewpoint of reducing damage to the recording medium 10.

### (Combination of materials of base material 31, intermediate layer 33 and overlay layer 35)

It is preferable that the base material 31, the intermediate layer 33, and the overlay layer 35 contain the same type of resin material from the viewpoint of improving adhesion. The resin material may be a thermoplastic resin. It is preferable that the base material 31, the intermediate layer 33, and the overlay layer 35 contain a polycarbonate (PC) resin or a polyethylene terephthalate (PET) resin from the viewpoint of environmental consideration. It is preferable that the base material 31, the intermediate layer 33, and the overlay layer 35 contain a polycarbonate (PC) resin or a polyvinyl chloride (PVC) resin from the viewpoint of improving durability. The base material 31, the intermediate layer 33, and the overlay layer 35 preferably contain a polycarbonate (PC) resin from the viewpoint of improving adhesion, environmental consideration, and durability.

It can be confirmed, for example, as follows that the base material 31, the intermediate layer 33, and the overlay layer 35 contain the same type of resin material. First, the base material 31, the intermediate layer 33, and the overlay layer 35 are taken out from the card 30. Next, IR spectra of the base material 31, the intermediate layer 33, and the overlay layer 35 are acquired by infrared absorption spectrometry (IR). Next, by comparing the acquired IR spectra of the individual layers, it is confirmed that the same type of resin material is contained in the base material 31, the intermediate layer 33, and the overlay layer 35.

Furthermore, the type of the resin material contained in each of the base material 31, the intermediate layer 33, and the overlay layer 35 can be confirmed using the acquired IR spectrum of each layer.

### (Recording medium 10)

The recording medium 10 is provided between the base material 31 and the overlay layer 35. The recording medium 10 is accommodated in the accommodation part 33A such that the base material 11 of the recording medium 10 faces the base material 31. A face photograph or the like may be drawn on the recording medium 10. However, the information drawn on the recording medium 10 is not limited to the face photograph, and may be ID information for security or the like.

The recording medium 10 has a first surface facing the overlay layer 35 and a second surface facing the base material 31. It is preferable that the first surface and/or the second surface of the recording medium 10 be subjected to easy adhesion treatment such as plasma treatment from the viewpoint of improving adhesion. In the present specification, the term "and/or" means "at least one", and for example, in a case where the term is used in a phrase "X and/or Y ", this phrase means three cases of "only X", "only Y", and "X and Y".

### [Method of manufacturing card]

Hereinafter, an example of a method of manufacturing the card 30 according to Application example 1 will be described.

First, a thermosetting resin as a thermosetting adhesive is applied to the first surface of the base material 31 to form the adhesive layer 32. Next, after the intermediate layer 33 is placed on the adhesive layer 32, the recording medium 10 is fitted into the accommodation part 33A of the intermediate layer 33. Note that the intermediate layer 33 in which the recording medium 10 is fitted in advance in the accommodation part 33A may be placed on the adhesive layer 32. Instead, the adhesive layer 32 may be formed by applying a thermosetting resin onto the intermediate layer 33 in which the recording medium 10 is fitted in advance in the accommodation part 33A, and then placing the intermediate layer 33 on the first surface of the base material 31 so as to sandwich the coating therebetween. Alternatively, the adhesive layer 32 may be formed by bonding a sheet formed by applying a thermosetting resin in advance to a separator or the like, to the first surface of the base material 31 or the intermediate layer 33 in which the recording medium 10 is fitted in the accommodation part 33A in advance, by means such as thermal lamination.

Next, a thermosetting resin as the thermosetting adhesive is applied onto the intermediate layer 33 to form the adhesive layer 34, and then the overlay layer 35 is placed on the adhesive layer 34. Next, the obtained laminate is sandwiched between metal plates and pressurized while being heated, thereby thermally curing the adhesive layer 32 and the adhesive layer 34. A temperature applied to the laminate at the time of the thermal curing is preferably 100°C or more and 120°C or less from the viewpoint of reducing damage to the recording medium 10. Thus, the target card 30 is obtained. The adhesive layer 34 may be formed by applying a thermosetting resin to the overlay layer 35 and then placing the overlay layer 35 on the intermediate layer 33 so as to sandwich the coating therebetween. Furthermore, the adhesive layer 34 may be formed by bonding a sheet formed by applying a thermosetting resin in advance to a separator or the like, to the overlay layer 35 or the intermediate layer 33 by means of thermal lamination or the like.

### [Operations and Effects]

As described above, in the card 30 according to Application example 1, the base material 31 and the intermediate layer 33 are bonded together preferably by the adhesive layer 32 containing a thermosetting adhesive, and the intermediate layer 33 and the overlay layer 35 are bonded together preferably by the adhesive layer 32 containing a thermosetting adhesive. With this configuration, the base material 31 and the intermediate layer 33, and the intermediate layer 33 and the overlay layer 35 can firmly adhere to one another. Therefore, tampering can be prevented more reliability.

Since the recording medium 10 is fitted in the accommodation part 33A of the intermediate layer 33, it can be made difficult to visually recognize a boundary between the recording medium 10 and the intermediate layer 33 in the in-plane direction of the card 30. Thus, it is difficult to recognize a portion where the recording medium 10 is provided in the plane of the card 30. Accordingly, tampering can be prevented more reliability.

Since the recording medium 10 is sealed in the inner portion of the card 30, the influence of moisture on the recording medium 10 can be reduced.

### [Modifications]

### (Modification 1)

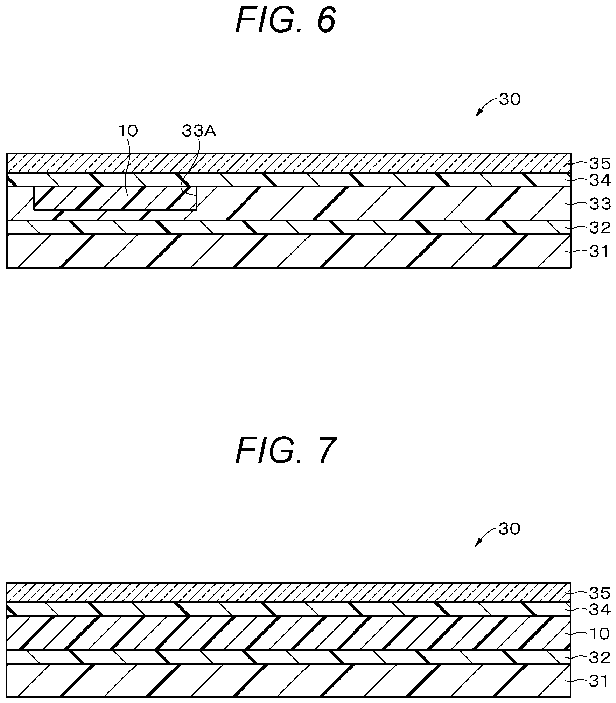

In Application example 1, an example has been described in which the accommodation part 33A is a through hole penetrating in the thickness direction of the intermediate layer 33, but the accommodation part 33A may be a bottomed recess recessed in the thickness direction of the intermediate layer 33 as illustrated in Fig. 6. In this case, the recess may be provided on a main surface facing the overlay layer 35 or on a main surface facing the base material 31, among both main surfaces of the intermediate layer 33.

### (Modification 2)

In Application example 1, an example has been described in which the card 30 includes the recording medium 10 in a partial region of the first surface of the base material 31. However, as illustrated in Fig. 7, the card 30 may include the recording medium 10 in substantially the entire region of the first surface of the base material 31. Specifically, the card 30 may include the recording medium 10 having substantially the same size as the base material 31 between the adhesive layer 32 and the adhesive layer 34.

### (Modification 3)

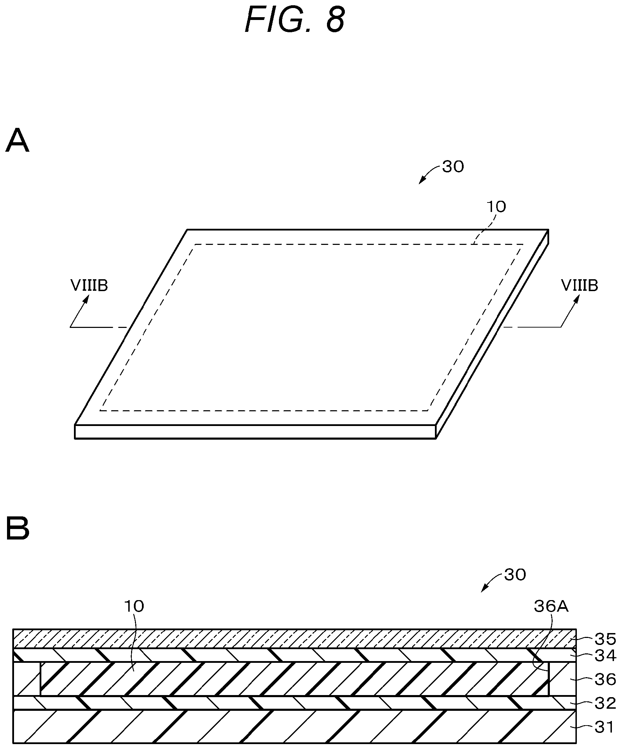

In Application example 1, an example in which the card 30 includes the intermediate layer 33 has been described, but as illustrated in Figs. 8A and 8B, the card 30 may include an intermediate layer 36 instead of the intermediate layer 33. The intermediate layer 36 can protect a side surface of the recording medium 10. The intermediate layer 36 surrounds a peripheral edge portion of one main surface of the base material 31. The intermediate layer 36 has a frame shape in plan view. In the present specification, the peripheral edge portion of the one main surface refers to a region having a predetermined width from a peripheral edge of the one main surface toward the inside. Furthermore, in the present specification, plan view means plan view when an object is viewed from a direction perpendicular to one main surface of the base material 31.

The intermediate layer 36 includes an accommodation part 36A. The recording medium 10 is accommodated in the accommodation part 36A. The accommodation part 36A is a through hole penetrating in the thickness direction of the recording medium 10. The intermediate layer 36 and the recording medium 10 preferably have substantially the same thickness. As a result, it is possible to suppress generation of a difference in level at a boundary between the intermediate layer 36 and the recording medium 10 in a state where the recording medium 10 is subjected to the accommodation part 36A.

The intermediate layer 36 has a film shape. The intermediate layer 36 may have transparency. The intermediate layer 36 contains plastic. As the plastic, a material similar to that of the base material 31 can be exemplified.

### (Modification 4)

In Application example 1, an example has been described in which the card 30 includes the recording medium 10 according to the first embodiment. However, the card 30 may include the recording medium 10 according to any one of Modifications 1 to 4 of the first embodiment, or may include the recording medium 10A according to the second embodiment or the recording medium 10A according to any one of Modifications 1 to 4 of the second embodiment.

### <3-2 Application example 2>

In Application example 2, an example of a card having a configuration different from that of Application example 1 will be described.

### [Configuration of card]

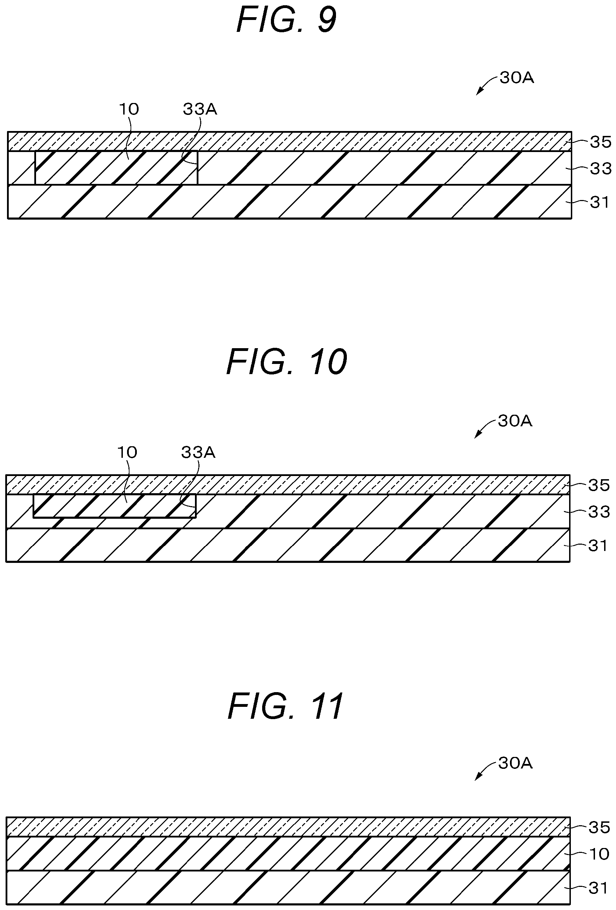

Hereinafter, an example of a configuration of a card 30A according to Application example 2 will be described with reference to Fig. 9. The card 30A is different from the card 30 according to Application example 1 in that the card 30A does not include the adhesive layer 32 and the adhesive layer 34, and in that the base material 31 and the intermediate layer 33, and the intermediate layer 33 and the overlay layer 35 are bonded by fusion.

In Application example 2, it is preferable that the base material 31, the intermediate layer 33, and the overlay layer 35 contain a thermoplastic resin as plastic. With the base material 31, the intermediate layer 33, and the overlay layer 35 containing the thermoplastic resin, the interlayer adhesion strength by fusion can be enhanced. From the viewpoint of reducing damage to the recording medium 10, the thermoplastic resin is preferably capable of thermally fusing the layers of the card 30A together in a temperature range of 130°C or more and 200°C or less.

The base material 31, the intermediate layer 33, and the overlay layer 35 may contain the same type of thermoplastic resin, but the base material 31, the intermediate layer 33, and the overlay layer 35 are not necessarily required to contain the same type of thermoplastic resin. In a case where the base material 31, the intermediate layer 33, and the overlay layer 35 do not contain the same type of thermoplastic resin, one layer of the base material 31, the intermediate layer 33, and the overlay layer 35 may contain a thermoplastic resin different in type from the other two layers, and the base material 31, the intermediate layer 33, and the overlay layer 35 may contain thermoplastic resins different in type from each other.

In a case where the base material 31, the intermediate layer 33, and the overlay layer 35 contain the same type of thermoplastic resin, it is preferable that the base material 31, the intermediate layer 33, and the overlay layer 35 contain at least one selected from the group including a semi-crystalline thermoplastic resin and an amorphous thermoplastic resin from the viewpoint of improving the interlayer adhesion strength by fusion.

The semi-crystalline thermoplastic resin includes, for example, at least one selected from the group including a polypropylene (PP) resin, a polyethylene (PE) resin, a polyacetal (POM) resin, a polyethylene terephthalate (PET) resin, a polybutylene terephthalate (PBT) resin, a polyphenylene sulfide (PPS) resin, a polyether ether ketone (PEEK) resin, and the like.

The amorphous thermoplastic resin includes, for example, at least one selected from the group including an ABS resin, a polycarbonate (PC) resin, a polymer alloy of an ABS resin and a PC resin (hereinafter, referred to as "ABS/PC polymer alloy"), an AS resin, a polystyrene (PS) resin, a polymethyl methacrylate (PMMA) resin, a polyphenylene oxide (PPO) resin, a polysulfone (PSU) resin, a polyvinyl chloride (PVC) resin, a polyetherimide (PEI) resin, a polyethersulfone (PES) resin, and the like.

In a case where the base material 31, the intermediate layer 33, and the overlay layer 35 do not contain the same type of thermoplastic resin, it is preferable that the base material 31, the intermediate layer 33, and the overlay layer 35 contain a non-crystalline thermoplastic resin from the viewpoint of improving the interlayer adhesion strength by fusion.

The combination of the non-crystalline thermoplastic resins contained individually in two adjacent layers of the card 30A is preferably as follows. In a case where one of two adjacent layers of the card 30A contains an ABS resin, the other layer preferably contains at least one selected from the group including an ABS/PC polymer alloy resin, a polycarbonate (PC) resin, an AS resin, a polystyrene (PS) resin, a polymethyl methacrylate (PMMA) resin, and a polyvinyl chloride (PVC) resin.

In a case where one of two adjacent layers of the card 30A contains an ABS/PC polymer alloy, the other layer preferably contains at least one selected from the group including an ABS resin, a polycarbonate (PC) resin, and a polymethyl methacrylate (PMMA) resin. In a case where one of two adjacent layers of the card 30A contains polycarbonate (PC) resin, the other layer preferably contains at least one selected from the group including an ABS resin, an ABS/PC polymer alloy resin, and a polymethyl methacrylate (PMMA) resin.

In a case where one of two adjacent layers of the card 30A contains an AS resin, the other layer preferably contains at least one selected from the group including an ABS resin, a polystyrene (PS) resin, a polymethyl methacrylate (PMMA) resin, and a polyphenylene oxide (PPO) resin. In a case where one of two adjacent layers of the card 30A contains polystyrene (PS) resin, the other layer preferably contains at least one selected from the group including an AS resin and a polyphenylene oxide (PPO) resin.

In a case where one of two adjacent layers of the card 30A contains a polymethyl methacrylate (PMMA) resin, the other layer preferably contains at least one selected from the group including an ABS resin, an ABS/PC polymer alloy resin, an AS resin, and a polyphenylene oxide (PPO) resin. In a case where one of two adjacent layers of the card 30A contains a polyphenylene oxide (PPO) resin, the other layer preferably contains at least one selected from the group including a polycarbonate (PC) resin, an AS resin, a polystyrene (PS) resin, and a polymethyl methacrylate (PMMA) resin.

In a case where one of two adjacent layers of the card 30A contains a polysulfone (PSU) resin, the other layer preferably contains a polycarbonate (PC) resin. In a case where one of two adjacent layers of the card 30A contains a polyvinyl chloride (PVC) resin, the other layer preferably contains an ABS resin.

### [Method of manufacturing card]

Hereinafter, an example of a method of manufacturing the card 30A according to Application example 2 will be described.

First, after the intermediate layer 33 is placed on the first surface of the base material 31, the recording medium 10 is fitted into the accommodation part 33A of the intermediate layer 33. Note that the intermediate layer 33 in which the recording medium 10 is fitted in advance in the accommodation part 33A may be placed on the first surface of the base material 31. Next, the overlay layer 35 is placed on the intermediate layer 33. Next, the obtained laminate is sandwiched between metal plates and pressurized while being heated, thereby thermally fusing the base material 31 and the intermediate layer 33 together, and the intermediate layer 33 and the overlay layer 35 together. The temperature applied to the laminate at the time of thermal fusion is preferably 110°C or more and 200°C or less from the viewpoint of reducing damage to the recording medium 10 and the viewpoint of exhibiting sufficient fusion strength. Thus, the target card 30A is obtained.

### [Operations and Effects]

As described above, in the card 30A according to Application example 2, the base material 31 and the intermediate layer 33, and the intermediate layer 33 and the overlay layer 35 are fused. With this configuration, the base material 31 and the intermediate layer 33, and the intermediate layer 33 and the overlay layer 35 can be firmly bonded. Therefore, tampering can be prevented more reliability.

### [Modifications]

### (Modification 1)

In Application example 2, an example has been described in which the accommodation part 33A is a through hole penetrating in the thickness direction of the intermediate layer 33, but the accommodation part 33A may be a bottomed recess recessed in the thickness direction of the intermediate layer 33 as illustrated in Fig. 10. In this case, the recess may be provided on a main surface facing the overlay layer 35 or on a main surface facing the base material 31, among both main surfaces of the intermediate layer 33.

### (Modification 2)

In Application example 2, an example has been described in which the card 30A includes the recording medium 10 in a partial region of the first surface of the base material 31. However, as illustrated in Fig. 11, the card 30A may include the recording medium 10 in substantially the entire region of the first surface of the base material 31. Specifically, the card 30A may include the recording medium 10 having substantially the same size as the base material 31 between the base material 31 and the overlay layer 35.

### (Modification 3)

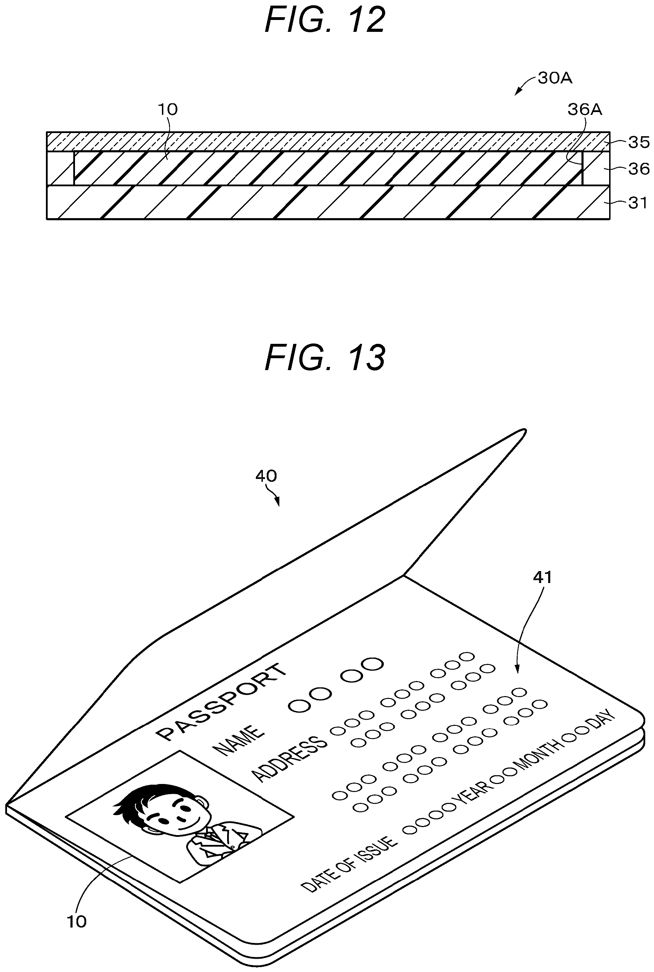

In Application example 2, an example in which the card 30A includes the intermediate layer 33 has been described, but as illustrated in Fig. 12, the card 30A may include the intermediate layer 36 instead of the intermediate layer 13. The intermediate layer 36 is as described in Modification 3 of Application example 1.

### (Modification 4)

In Application example 2, an example has been described in which the card 30A includes the recording medium 10 according to the first embodiment. However, the card 30 may include the recording medium 10 according to any one of Modifications 1 to 4 of the first embodiment, or may include the recording medium 10A according to the second embodiment or the recording medium 10A according to any one of Modifications 1 to 4 of the second embodiment.

### <3-3 Application example 3>

In Application example 3, an example of a booklet provided with the recording medium 10 according to the first embodiment will be described.

### [Configuration of booklet]

Fig. 13 is a perspective view illustrating an example of a configuration of a booklet 40 according to Application example 3. The booklet 40 is a passport.

The passport is an example of booklet-type identification. The booklet 40 includes a plurality of sheets 41. The plurality of sheets 41 is saddle-stitched. The recording medium 10 is provided on a part of one surface or both surfaces of the sheet 41. A face photograph or the like is drawn on the recording medium 10. The sheet 41 may have a layer configuration similar to that of the card 30 according to Application example 1 or the card 30A of Application example 2. In this case, the base material 31 may be paper or the like.

### [Modifications]

### (Modification 1)

In Application example 3, an example has been described in which the booklet 40 includes the recording medium 10 in a partial region of one surface or both surfaces of the sheet 41, but the booklet 40 may include the recording medium 10 in substantially the entire region of one surface or both surfaces of the sheet 41. Specifically, the booklet 40 may include the recording medium 10 having substantially the same size as the sheet 41 on one surface or both surfaces.

### (Modification 2)

In Application example 3, an example has been described in which the booklet 40 includes the recording medium 10 according to the first embodiment. However, the booklet 40 may include the recording medium 10 according to any one of Modifications 1 to 4 of the first embodiment, or may include the recording medium 10A according to the second embodiment or the recording medium 10A according to any one of Modifications 1 to 4 of the second embodiment.

### <3-4 Application example 4>

In Application example 4, an example of a smartphone provided with the recording medium 10 according to the first embodiment will be described.

### [Configuration of smartphone]

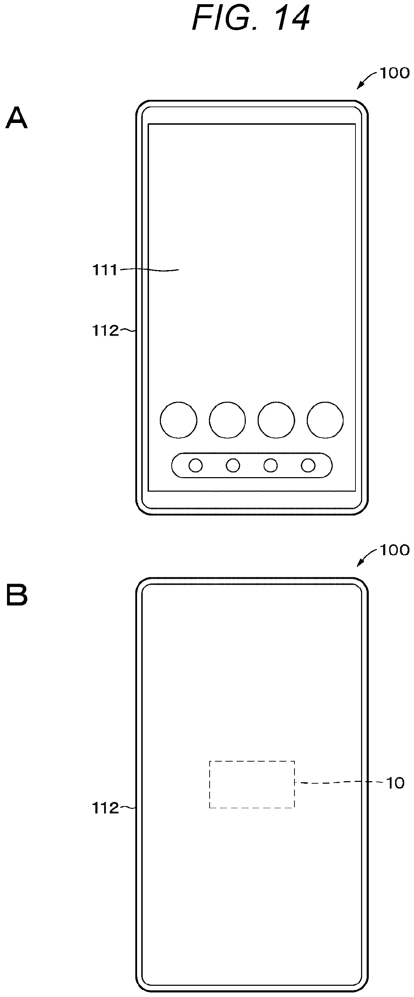

Fig. 14A is a plan view illustrating an example of an appearance on a front side of a smartphone according to Application example 4. Fig. 14B is a plan view of an appearance on a back side of the smartphone according to Application example 4. A smartphone 100 includes, for example, a display unit 111 and a housing 112. The recording medium 10 is provided on a back side of the housing 112. The housing 112 is formed by a laminate. This laminate may have a layer configuration similar to that of the card 30 according to Application example 1 or the card 30A according to Application example 2, except that the base material has the housing shape of the smartphone 100. In this case, forgery prevention and the like of the smartphone 100 can be improved.

### [Modifications]

In Application example 4, an example has been described in which the smartphone 100 includes the recording medium 10 according to the first embodiment. However, the smartphone 100 may include the recording medium 10 according to any one of Modifications 1 to 4 of the first embodiment, or may include the recording medium 10A according to the second embodiment or the recording medium 10A according to any one of Modifications 1 to 4 of the second embodiment.

### <3-5 Application example 5>

In Application example 5, an example of a notebook PC provided with the recording medium 10 according to the first embodiment will be described.

### [Configuration of notebook PC]

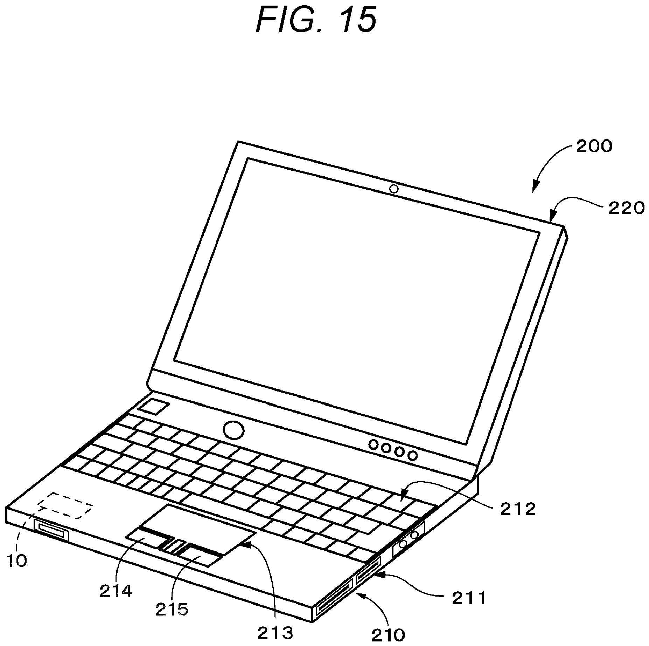

Fig. 15 is a perspective view illustrating an example of an appearance of a notebook personal computer according to Application example 5. The notebook PC 200 includes a computer main body 210 and a display 220. The computer main body 210 includes a housing 211, a keyboard 212, a wheel/pad operation unit 213, and click buttons 214 and 215. The recording medium 10 is provided in the housing 112. The housing 211 is formed by a laminate. This laminate may have a layer configuration similar to that of the card 30 according to Application example 1 or the card 30A according to Application example 2, except that the base material has the housing shape of the notebook PC 200. In this case, forgery prevention and the like of the notebook PC 200 can be improved.

### [Modifications]

In Application example 5, an example has been described in which the notebook PC 200 includes the recording medium 10 according to the first embodiment. However, the notebook PC 200 may include the recording medium 10 according to any one of Modifications 1 to 4 of the first embodiment, or may include the recording medium 10A according to the second embodiment or the recording medium 10A according to any one of Modifications 1 to 4 of the second embodiment.

### <3-6 Application example 6>

In Application example 6, an example of a cosmetic container provided with the recording medium 10 according to the first embodiment will be described.

### [Configuration of cosmetic container]

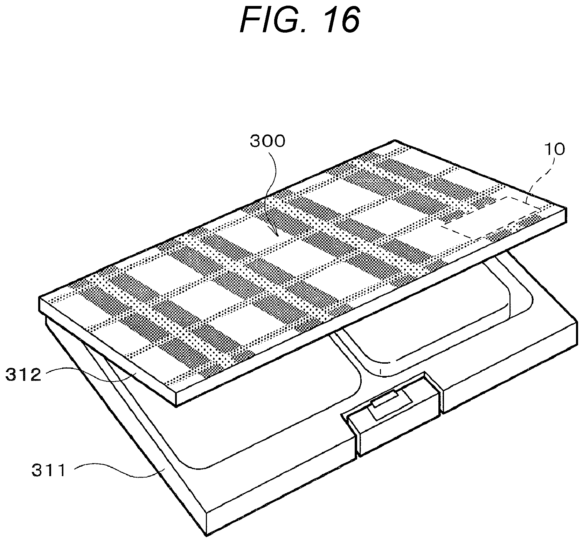

Fig. 16 is a perspective view illustrating an example of an appearance of a cosmetic container according to Application example 6. A cosmetic container 300 includes an accommodation part 311 and a lid 312 that covers the accommodation part 311. The recording medium 10 is provided in the lid 312. The lid 312 is formed by a laminate. This laminate may have a layer configuration similar to that of the card 30 according to Application example 1 or the card 30A according to Application example 2, except that the base material has a shape corresponding to the lid 312. In this case, forgery prevention and the like of the cosmetic container 300 can be improved.

### [Modifications]

In Application example 6, an example has been described in which the cosmetic container 300 includes the recording medium 10 according to the first embodiment. However, the cosmetic container 300 may include the recording medium 10 according to any one of Modifications 1 to 4 of the first embodiment, or may include the recording medium 10A according to the second embodiment or the recording medium 10A according to any one of Modifications 1 to 4 of the second embodiment.

The embodiments and the Modifications thereof of the present disclosure have been specifically described above, but the present disclosure is not limited to the embodiments and Modifications described above thereof, and various modifications on the basis of the technical idea of the present disclosure are possible.

For example, configurations, methods, processes, shapes, materials, numerical values, and the like described in the above-described embodiments and Modifications are merely examples, and different configurations, methods, processes, shapes, materials, numerical values, and the like may be used as necessary. The configurations, methods, steps, shapes, materials, numerical values, and the like of the embodiments and Modifications described above can be combined with each other without departing from the gist of the present disclosure.

In numerical value ranges described in stages in the embodiments and Modifications described above, an upper limit value or a lower limit value of a numerical value range of a certain stage may be replaced with the upper limit value or the lower limit value of the numerical value range of another stage. The materials exemplified in the embodiments and Modifications described above may be used alone or in combination of two or more unless otherwise specified.

Furthermore, the present disclosure can also adopt the following configurations.
(1) A recording medium including:
   two or more recording layers; and
   one or more resin layers, in which
   each of the recording layers contains a first polycarbonate resin,
   each of the resin layers is provided between two of the recording layers, and
   each of the resin layers contains an ultraviolet curable resin and a second polycarbonate resin.
(2) The recording medium according to (1), in which
   each of the recording layers contains a coloring compound having an electron-donating property and a developer having an electron-accepting property.
(3) The recording medium according to (1) or (2), in which
   each of the recording layers is able to change a colored state by an external stimulus.
(4) The recording medium according to (3), in which
   the external stimulus is laser light.
(5) The recording medium according to (3) or (4), in which
   a change of the colored state is an irreversible change.
(6) The recording medium according to any one of (1) to (5), in which
   a content of the second polycarbonate resin in each of the resin layers is 15 mass% or more and 33 mass% or less.
(7) The recording medium according to any one of (1) to (5), in which
   a content of the second polycarbonate resin in each of the resin layers is 20 mass% or more and 25 mass% or less.
(8) The recording medium according to any one of (1) to (7), in which
   a content of the ultraviolet curable resin in each of the resin layers is 60 mass% or more and 80 mass% or less.
(9) The recording medium according to any one of (1) to (8), in which
   the second polycarbonate resin has at least one ultraviolet reactive group.
(10) The recording medium according to any one of (1) to (8), in which
   the second polycarbonate resin has at least one group including an ethylenically unsaturated bond.
(11) The recording medium according to (10), in which
   the at least one group including an ethylenically unsaturated bond contains at least one selected from a group including a vinyl group, an acryloyl group, and a methacryloyl group.
(12) The recording medium according to any one of (1) to (11), in which
   each of the resin layers has solubility in methyl ethyl ketone.
(13) The recording medium according to any one of (1) to (12), further including:
   one or more pressure-sensitive adhesive layers, in which
   each of the pressure-sensitive adhesive layers is provided between two of the recording layers together with each of the resin layers.
(14) The recording medium according to any one of (1) to (13), in which
   each of the resin layers is adjacent to at least one recording layer among the two recording layers, and
   an average peel strength between a resin layer among the resin layers and the recording layer adjacent to the resin layer is 3.5 N/cm or more
(15) A laminate including:
   a base material;
   an intermediate layer provided on the base material and having an accommodation part;
   a recording medium provided in the accommodation part; and
   an overlay layer provided on the intermediate layer, in which
   the accommodation part is provided in a part of a plane of the intermediate layer,
   the accommodation part is a through hole penetrating in a thickness direction of the intermediate layer, or a recess recessed in a thickness direction of the intermediate layer,
   the base material, the intermediate layer, and the overlay layer contain a same kind of resin material,
   the base material and the intermediate layer are bonded to each other by fusion, and the intermediate layer and the overlay layer are bonded to each other by fusion, and
   the recording medium is the recording medium according to any one of (1) to (14).
(16) A laminate including:
   a base material;
   an overlay layer;
   an intermediate layer provided between the base material and the overlay layer and having an accommodation part; and
   a recording medium provided in the accommodation part, in which
   the accommodation part is provided in a part of a plane of the intermediate layer,
   the accommodation part is a through hole penetrating in a thickness direction of the intermediate layer, or a recess recessed in a thickness direction of the intermediate layer,
   the base material, the intermediate layer, and the overlay layer contain a same kind of resin material,
   the base material and the intermediate layer are bonded to each other by a thermal adhesive, and the intermediate layer and the overlay layer are bonded to each other by a thermal adhesive, and
   the recording medium is the recording medium according to any one of (1) to (14).
(17) The laminate according to (15) or (16), in which
   the resin material contains a thermoplastic resin.
(18) The laminate according to (15) or (16), in which
   the resin material contains a polycarbonate resin or a polyethylene terephthalate resin.
(19) A recording medium including:
   two or more recording layers; and
   one or more resin layers, in which
   each of the recording layers contains a first thermoplastic resin,
   each of the resin layers is provided between two of the recording layers, and
   each of the resin layers contains an ultraviolet curable resin and a second thermoplastic resin of a same type as the first thermoplastic resin.
(20) The recording medium according to (19), in which
   each of the recording layers contains a coloring compound having an electron-donating property and a developer having an electron-accepting property.

### <4 Example>

Hereinafter, the present disclosure will be specifically described with reference to examples, but the present disclosure is not limited to these examples.

### [Examples 1 to 6]

A configuration of a recording medium of Examples 1 to 6 is as follows. Note that the order of description of each layer below corresponds to the order of lamination of each layer.
Cover layer: PC film, thickness 25 µm
Fifth pressure-sensitive adhesive layer: OCA, thickness 6 µm
UV cut layer: thickness 10 µm
Fourth resin layer: ultraviolet curable resin layer (hard coat layer (hereinafter, referred to as an "HC layer")), thickness 3 µm
Fourth pressure-sensitive adhesive layer: OCA, thickness 6 µm
Third resin layer: a resin layer containing an ultraviolet curable resin and polycarbonate, thickness 3 µm
Third recording layer: a recording layer that exhibits a yellow color in a color-developed state, thickness 5 µm
Third pressure-sensitive adhesive layer: OCA, thickness 6 µm
Second resin layer: a resin layer containing an ultraviolet curable resin and polycarbonate, thickness 3 µm
Second recording layer: a recording layer that exhibits cyan color in a color-developed state, thickness 5 µm
Second pressure-sensitive adhesive layer: OCA, thickness 6 µm
First resin layer: a resin layer containing an ultraviolet curable resin and polycarbonate, thickness 3 µm
First recording layer: a recording layer that exhibits a magenta color in a color-developed state, thickness 5 µm
First pressure-sensitive adhesive layer: OCA, thickness 6 µm
Base material film: PC film, thickness 25 µm

A recording medium having the above-described layer configuration was prepared as follows.

### (Step of forming first laminated film)

First, polycarbonate (PC) as a matrix resin was dissolved in methyl ethyl ketone (MEK), further added with a developer, and dispersed with use of a rocking mill. As the developer, a bis(hydroxybenzoic acid) compound was used. Next, a leuco dye exhibiting a magenta color in a color-developed state was added, and prepared to finally obtain a ratio (mass ratio) 1:2:4 of the leuco dye, the developer, and the polycarbonate. Moreover, a photothermal conversion agent having an absorption wavelength peak at a wavelength λ₁ and having a phthalocyanine skeleton was added to prepare a first recording layer-forming coating material.

Next, polycarbonate and an ultraviolet curable acrylic resin for forming an HC layer were mixed to prepare a first resin layer-forming coating material. As the polycarbonate, a polycarbonate having a methacryloyl group was used. A mixing ratio of the polycarbonate and the ultraviolet curable acrylic resin was adjusted to a different value for each of Examples 1 to 6 as shown in Table 1. Subsequently, the first resin layer-forming coating material was applied onto a flat surface, and then the first resin layer-forming coating material was irradiated with ultraviolet rays and cured to form the first resin layer. Next, the first recording layer-forming coating material was applied onto the first resin layer by a gravure coating method, and dried and cured to form the first recording layer. In this way, a first laminated film including the first resin layer and the first recording layer was obtained.

### (Step of forming second laminated film)

A leuco dye exhibiting cyan color in a color-developed state was used as the leuco dye, and a photothermal conversion agent having an absorption wavelength peak at a wavelength λ₂ and having a phthalocyanine skeleton was used as the photothermal conversion agent. Except for the above, a second laminated film including the second resin layer and the second recording layer was obtained similarly to the step of forming the first laminated film except for these.

### (Step of forming third laminated film)

A leuco dye exhibiting yellow color in a color-developed state was used as the leuco dye, and a photothermal conversion agent having an absorption wavelength peak at a wavelength λ₃ and having a phthalocyanine skeleton was used as the photothermal conversion agent. Except for the above, a third laminated film including the third resin layer and the third recording layer was obtained similarly to the step of forming the first laminated film except for these. Note that the wavelengths λ₁, λ₂, and λ₃ were selected to have different values.

### (Step of forming fourth laminated film)

The cover layer (PC film), the fifth pressure-sensitive adhesive layer (OCA), the UV cut layer, and the fourth resin layer (HC layer) were sequentially laminated to obtain a fourth laminated film.

### (Lamination Step)

The fourth laminated film, the fourth pressure-sensitive adhesive layer (OCA), the third laminated film, the third pressure-sensitive adhesive layer (OCA), the second laminated film, the second pressure-sensitive adhesive layer (OCA), the first laminated film, the first pressure-sensitive adhesive layer (OCA), and the base material film (PC film) were sequentially laminated. As a result, a target recording medium was obtained.

### [Example 7]

A configuration of the recording medium of Example 7 is as follows. Note that the order of description of each layer below corresponds to the order of lamination of each layer.
Cover layer: PC film, thickness 25 µm
Fourth pressure-sensitive adhesive layer: OCA, thickness 6 µm
UV cut layer: thickness 10 µm
Third resin layer: ultraviolet curable resin layer (HC layer), thickness 3 µm
Third pressure-sensitive adhesive layer: OCA, thickness 6 µm
Third recording layer: a recording layer that exhibits a yellow color in a color-developed state, thickness 5 µm
Second resin layer: a resin layer containing an ultraviolet curable resin and polycarbonate, thickness 3 µm
Second pressure-sensitive adhesive layer: OCA, thickness 15 µm
Second recording layer: a recording layer that exhibits cyan color in a color-developed state, thickness 5 µm
First resin layer: a resin layer containing an ultraviolet curable resin and polycarbonate, thickness 3 µm
First pressure-sensitive adhesive layer: OCA, thickness 15 µm
First recording layer: a recording layer that exhibits a magenta color in a color-developed state, thickness 5 µm

A recording medium having the above-described layer configuration was prepared as follows.

### (Step of forming first recording layer)

A first recording layer-forming coating material was prepared similarly to the preparation step of the first recording layer-forming coating material in Example 1. Next, the first recording layer-forming coating material was applied onto a flat surface by a gravure coating method, and dried and cured to form the first recording layer.

### (Step of forming first laminated film)

A first laminated film including the first resin layer and the second recording layer was obtained similarly to the step of forming the second laminated film in Example 5.

### (Step of forming second laminated film)

A second laminated film including the second resin layer and a third recording layer was obtained similarly to the step of forming the third laminated film in Example 5.

### (Step of forming third laminated film)

A third laminated film was obtained similarly to the step of forming the fourth laminated film in Example 1.

### (Lamination Step)

The third laminated film, the third pressure-sensitive adhesive layer (OCA), the second laminated film, the second pressure-sensitive adhesive layer (OCA), the first laminated film, the first pressure-sensitive adhesive layer (OCA), and the first recording layer were sequentially laminated. As a result, a target recording medium was obtained.

### [Comparative example 1]

A configuration of a recording medium of Comparative example 1 is as follows. Note that the order of description of each layer below corresponds to the order of lamination of each layer.
Cover layer: PC film, thickness 25 µm
Fifth pressure-sensitive adhesive layer: OCA, thickness 6 µm
UV cut layer: thickness 10 µm
Fourth resin layer: ultraviolet curable resin layer (HC layer), thickness 3 µm
Fourth pressure-sensitive adhesive layer: OCA, 6 µm
Third resin layer: ultraviolet curable resin layer (HC layer), thickness 3 µm
Third recording layer: a recording layer that exhibits a yellow color in a color-developed state, thickness 5 µm
Third pressure-sensitive adhesive layer: OCA, thickness 6 µm
Second resin layer: ultraviolet curable resin layer (HC layer), thickness 3 µm
Second recording layer: a recording layer that exhibits cyan color in a color-developed state, thickness 5 µm
Second pressure-sensitive adhesive layer: OCA, thickness 6 µm
First resin layer: ultraviolet curable resin layer (HC layer), thickness 3 µm
First recording layer: a recording layer that exhibits a magenta color in a color-developed state, thickness 5 µm
First pressure-sensitive adhesive layer: OCA, thickness 6 µm
Base material film: PC film, thickness 25 µm

A recording medium having the above-described layer configuration was prepared as follows. Only an ultraviolet curable acrylic resin for forming an HC layer was used as a first resin layer-forming coating material without mixing polycarbonate. Similarly, only the ultraviolet curable acrylic resin for forming the HC layer was used as a second resin layer-forming coating material, and only the ultraviolet curable acrylic resin for forming the HC layer was used as a third resin layer-forming coating material. Except for the above, a recording medium was obtained similarly to Example 1.

### [Comparative example 2]

A configuration of a recording medium of Comparative example 2 is as follows. Note that the order of description of each layer below corresponds to the order of lamination of each layer.
Cover layer: PC film, thickness 25 µm
Fifth pressure-sensitive adhesive layer: OCA, thickness 6 µm
UV cut layer: thickness 10 µm
Resin layer: ultraviolet curable resin layer (HC layer), thickness 3 µm
Fourth pressure-sensitive adhesive layer: OCA, thickness 6 µm
Third recording layer: a recording layer that exhibits a yellow color in a color-developed state, thickness 5 µm
Third pressure-sensitive adhesive layer: OCA, thickness 6 µm
Second recording layer: a recording layer that exhibits cyan color in a color-developed state, thickness 5 µm
Second pressure-sensitive adhesive layer: OCA, thickness 6 µm
First recording layer: a recording layer that exhibits a magenta color in a color-developed state, thickness 5 µm
First pressure-sensitive adhesive layer: OCA, thickness 6 µm
Base material film: PC film, thickness 25 µm

A recording medium having the above-described layer configuration was prepared as follows.

### (Step of forming first recording layer)

A first recording layer-forming coating material was prepared similarly to the preparation step of the first recording layer-forming coating material in Example 1. Next, the first recording layer-forming coating material was applied onto a flat surface by a gravure coating method, and dried and cured to form the first recording layer.

### (Step of forming second recording layer)

A second recording layer-forming coating material was prepared similarly to the preparation step of the second recording layer-forming coating material in Example 1. Next, the second recording layer-forming coating material was applied onto a flat surface by a gravure coating method, and dried and cured to form the second recording layer.

### (Step of forming third recording layer)

A third recording layer-forming coating material was prepared similarly to the preparation step of the third recording layer-forming coating material in Example 1. Next, the third recording layer-forming coating material was applied onto a flat surface by a gravure coating method, and dried and cured to form the third recording layer.

### (Step of forming first laminated film)

A first laminated film was obtained similarly to the step of forming the fourth laminated film in Example 1.

### (Lamination Step)

The first laminated film, the fourth pressure-sensitive adhesive layer (OCA), the third recording layer, the third pressure-sensitive adhesive layer (OCA), the second recording layer, the second pressure-sensitive adhesive layer (OCA), the first recording layer, the first pressure-sensitive adhesive layer (OCA), and the base material film (PC film) were sequentially laminated. As a result, a target recording medium was obtained.

### [Evaluation of recording medium]

The recording medium obtained as described above was evaluated as follows.

### (Adherence)

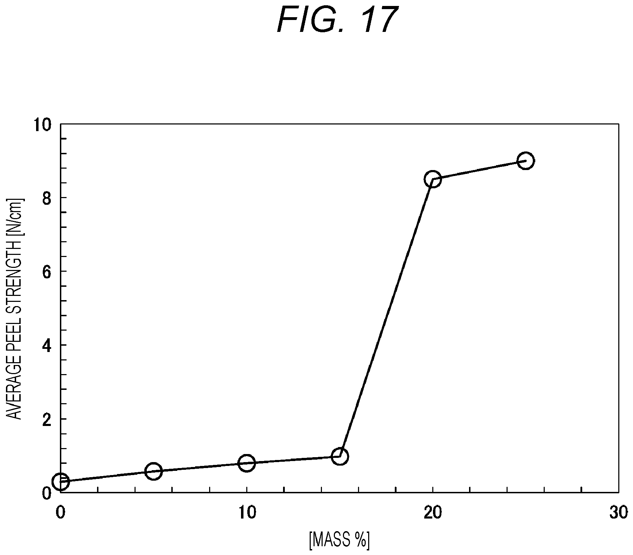

First, an average peel strength between individual layers of the laminate was measured. The average peel strength was measured by the method for measuring the average peel strength of the laminate described in the first embodiment. Next, the measured average peel strength was evaluated according to the following criteria. Among the average peel strengths between the individual layers of the laminate, the lowest average peel strength was shown in Table 1. Furthermore, a relationship between a content of a polycarbonate resin and the average peel strength is illustrated in Fig. 17.

∘: The lowest average peel strength among the average peel strengths between the individual layers of the laminate is larger than the lowest average peel strength among the average peel strengths between the individual layers of the laminate of Comparative example 1.

⊙: The average peel strength between the individual layers is 3.5 N/cm or more.

When the average peel strength between the individual layers is 3.5 N/cm or more, it becomes difficult to disassemble the recording medium, and it becomes difficult to tamper the recording medium.

### (Maximum color development OD)

First, the maximum color development OD of the recording medium was measured using a spectro-densitometer (eXact manufactured by X-Rite, Incorporated). Next, the color developability was evaluated according to the following criteria.

⊙: All of the maximum color development OD of CMY is 1.10 or more.

∘: All of the maximum color development OD of CMY is 1.00 or more, but at least one of the maximum color development OD of CMY is less than 1.10.

×: At least one of the maximum color development OD of CMY is less than 1.00.

The OD value 1.00 at which a person can be recognized when the person is drawn was used as a reference of evaluation ∘ and ×. With the OD value being less than 1.00, it is difficult for a person to be recognized when the person is drawn.

### (Color gamut retention after heating)

First, a color gamut was calculated by measuring a*b* of each color-developed portion and an undeveloped portion in the recording medium before and after heating, by using a spectro-densitometer (eXact manufactured by X-Rite, Incorporated). Color gamut retention after heating was determined from the color gamut before and after heating. Next, the color gamut retention after heating was evaluated according to the following criteria.

×: The color gamut retention after heating is 70% or more.

∘: The color gamut retention after heating is less than 70%.

Note that, with the color gamut retention being 70% or more, color representation of a person is favorable when the person is drawn.

### (Evaluation of solubility of resin layer)

First, the first resin layer-forming coating material used in Example 4 was applied onto a base material, and then the first resin layer-forming coating material was irradiated with ultraviolet rays and cured to form the first resin layer having a thickness of 3 µm. As a result, an evaluation sample 1 was obtained.

Next, evaluation samples 2 to 4 were obtained similarly to the preparation method of the evaluation sample 1 except that the first resin layer-forming coating material used in Example 5 to 7 was used. Next, an evaluation sample 5 was obtained similarly to the preparation method of the evaluation sample 1 except that the first resin layer-forming coating material used in Comparative example 1 was used.

Next, a cotton swab impregnated with methyl ethyl ketone was pressed against surfaces of the first resin layers of the evaluation samples 1 to 5, and the cotton swab was reciprocated 50 times. Thereafter, the surfaces of the evaluation samples 1 and 2 were visually observed, and solubility of the first resin layer was evaluated according to the following criteria. Evaluation results are shown in evaluation result columns of Example 5 and Comparative example 1.

∘: The base material surface is exposed.

×: The base material surface is not exposed.

### [Evaluation results]

**[Table 1]**

| | | Example 1 | Example 2 | Example 3 | Example 4 | Example 5 | Example 6 | Example 7 | Comparative example 1 | Comparative example 2 |
|---|---|---|---|---|---|---|---|---|---|---|
| Resin layer | Polycarbonate [mass%] | 5 | 10 | 15 | 20 | 25 | 43 | 25 | 0 | - |
| | Ultraviolet curable resin [mass%] | 95 | 90 | 85 | 80 | 75 | 57 | 75 | 100 | - |
| Adherence | Measurement value [N/cm] | 0.6 | 0.8 | 1.0 | 8.5 | 9.0 | 9.0 | 9.0 | 0.2 | 7.0 |
| | Evaluation result | ○ | ○ | ○ | ⊙ | ⊙ | ⊙ | ⊙ | - | ⊙ |
| Maximum color development OD (CMY) | Measurement value | 1.37/1.13/1.25 | 1.38/1.13/1.19 | 1.43/1.15/1.27 | 1.40/1.14/1.25 | 1.41/1.15/1.23 | 1.33/1.05/1.13 | 1.48/1.13/1.28 | 1.50/1.21/1.39 | 1.51/1.10/1.12 |
| | Evaluation result | ⊙ | ⊙ | ⊙ | ⊙ | ⊙ | ○ | ⊙ | ⊙ | ⊙ |
| Color gamut retention after heating | Measurement value [%] | 77 | 71 | 78 | 74 | 72 | 70 | 72 | 84 | 58 |
| | Evaluation result | ○ | ○ | ○ | ○ | ○ | ○ | ○ | ○ | × |
| Solubility | Evaluation result | - | - | - | ○ | ○ | ○ | ○ | × | - |

In the evaluation of adherence, in the recording medium of Comparative example 1, an interface between the first recording layer and the first resin layer or between the second recording layer and the second resin layer was most easily peeled off.

Whereas, in the recording medium of Examples 1 to 6, interfaces other than an interface between the first recording layer and the first resin layer, an interface between the second recording layer and the second resin layer, and an interface between the third recording layer and the third resin layer were most easily peeled off. Furthermore, in the recording medium of Example 7, interfaces other than an interface between the first resin layer and the second recording layer and an interface between the second resin layer and the third recording layer were most easily peeled off.

The following can be seen from Table 1 and Fig. 17.

The peel strength of the recording medium (Examples 1 to 7) in which the resin layer adjacent to the recording layer contains polycarbonate and an ultraviolet curable resin is higher than the peel strength of the recording medium (Comparative example 1) in which the resin layer adjacent to the recording layer contains only an ultraviolet curable resin. This is considered to be due to the following reason. That is, the resin layer containing only an ultraviolet curable resin had low solubility with methyl ethyl ketone, and a compatible region was not formed between the resin layer and the recording layer. On the other hand, the resin layer containing polycarbonate and an ultraviolet curable resin had solubility with methyl ethyl ketone, and a compatible region was formed between the resin layer and the recording layer.

In the recording medium (Comparative example 2) in which only the pressure-sensitive adhesive layer is provided between the recording layers, the peel strength is high, but the color gamut retention after heating is less than 70%. In the recording medium (Examples 1 to 7) in which the resin layer and the pressure-sensitive adhesive layer are provided between the recording layers, the peel strength is high, and the color gamut retention after heating is 70% or more. This is considered to be because the diffusion inhibiting function of the pressure-sensitive adhesive layer was deteriorated by heating in the recording medium (Comparative example 2) in which only the pressure-sensitive adhesive layer was provided between recording layers, while the diffusion inhibiting function of the resin layer did not deteriorate even after heating in the recording medium (Examples 1 to 7) in which the resin layer and the pressure-sensitive adhesive layer were provided between the recording layers.

From the viewpoint of improving the peel strength, a content of polycarbonate in the resin layer adjacent to the recording layer is preferably 15 mass% or more, and more preferably 20 mass% or more.

From the viewpoint of the drawing property of a person or the like and the color gamut retention after heating, a content of the ultraviolet curable resin in the resin layer adjacent to the recording layer is preferably 60 mass% or more.

### REFERENCE SIGNS LIST

10, 10A Recording medium
11 Base material
12A, 12B Pressure-sensitive adhesive layer
14A, 14B, 14C, 17A, 17B, 17C Intermediate layer
14A₁, 14B₁, 14C₁, 14C₃ Resin layer
14A₂, 14B₂, 14C₂ Pressure-sensitive adhesive layer
13A, 13B, 13C Recording layer
15 UV cut layer
16 Cover layer
30, 30A Card
32, 34 Adhesive layer
33, 36 Intermediate layer
33A, 36A Accommodation part
35 Overlay layer
40 Booklet
41 Sheet
100 Smartphone
200 Notebook personal computer
300 Cosmetic container

## Claims

1. A recording medium comprising:
two or more recording layers; and
one or more resin layers, wherein
each of the recording layers contains a first polycarbonate resin,
each of the resin layers is provided between two of the recording layers, and
each of the resin layers contains an ultraviolet curable resin and a second polycarbonate resin.

2. The recording medium according to claim 1, wherein
each of the recording layers contains a coloring compound having an electron-donating property and a developer having an electron-accepting property.

3. The recording medium according to claim 1, wherein
each of the recording layers is able to change a colored state by an external stimulus.

4. The recording medium according to claim 3, wherein
the external stimulus is laser light.

5. The recording medium according to claim 3, wherein
a change of the colored state is an irreversible change.

6. The recording medium according to claim 1, wherein
a content of the second polycarbonate resin in each of the resin layers is 15 mass% or more and 33 mass% or less.

7. The recording medium according to claim 1, wherein
a content of the second polycarbonate resin in each of the resin layers is 20 mass% or more and 25 mass% or less.

8. The recording medium according to claim 1, wherein
a content of the ultraviolet curable resin in each of the resin layers is 67 mass% or more and 85 mass% or less.

9. The recording medium according to claim 1, wherein
the second polycarbonate resin has at least one ultraviolet reactive group.

10. The recording medium according to claim 1, wherein
the second polycarbonate resin has at least one group including an ethylenically unsaturated bond.

11. The recording medium according to claim 10, wherein
the at least one group including an ethylenically unsaturated bond contains at least one selected from a group including a vinyl group, an acryloyl group, and a methacryloyl group.

12. The recording medium according to claim 1, wherein
each of the resin layers has solubility in methyl ethyl ketone.

13. The recording medium according to claim 1, further comprising:
one or more pressure-sensitive adhesive layers, wherein
each of the pressure-sensitive adhesive layers is provided between two of the recording layers together with each of the resin layers.

14. The recording medium according to claim 1, wherein
each of the resin layers is adjacent to at least one recording layer among the two recording layers, and
an average peel strength between a resin layer among the resin layers and the recording layer adjacent to the resin layer is 3.5 N/cm or more.

15. A laminate comprising:
a base material;
an intermediate layer provided on the base material and having an accommodation part;
a recording medium provided in the accommodation part; and
an overlay layer provided on the intermediate layer, wherein
the accommodation part is provided in a part of a plane of the intermediate layer,
the accommodation part is a through hole penetrating in a thickness direction of the intermediate layer, or a recess recessed in a thickness direction of the intermediate layer,
the base material, the intermediate layer, and the overlay layer contain a same kind of resin material,
the base material and the intermediate layer are bonded to each other by fusion, and the intermediate layer and the overlay layer are bonded to each other by fusion, and
the recording medium is the recording medium according to claim 1.

16. A laminate comprising:
a base material;
an overlay layer;
an intermediate layer provided between the base material and the overlay layer and having an accommodation part; and
a recording medium provided in the accommodation part, wherein
the accommodation part is provided in a part of a plane of the intermediate layer,
the accommodation part is a through hole penetrating in a thickness direction of the intermediate layer, or a recess recessed in a thickness direction of the intermediate layer,
the base material, the intermediate layer, and the overlay layer contain a same kind of resin material,
the base material and the intermediate layer are bonded to each other by a thermosetting adhesive, and the intermediate layer and the overlay layer are bonded to each other by a thermosetting adhesive, and
the recording medium is the recording medium according to claim 1.

17. The laminate according to claim 15, wherein
the resin material contains a thermoplastic resin.

18. The laminate according to claim 15, wherein
the resin material contains a polycarbonate resin or a polyethylene terephthalate resin.

19. A recording medium comprising:
two or more recording layers; and
one or more resin layers, wherein
each of the recording layers contains a first thermoplastic resin,
each of the resin layers is provided between two of the recording layers, and
each of the resin layers contains an ultraviolet curable resin and a second thermoplastic resin of a same type as the first thermoplastic resin.

20. The recording medium according to claim 19, wherein
each of the recording layers contains a coloring compound having an electron-donating property and a developer having an electron-accepting property.
